# EUROPEAN PATENT APPLICATION

(11) **EP 4 593 453 A1**
(43) Date of publication of application: **30.07.2025**
(21) Application number: 23867334.7
(22) Date of filing: 12.09.2023
(51) Int. Cl.: H04W 28/02

(54) **INFORMATION PROCESSING METHOD, AND COMMUNICATION DEVICE**

(30) Priority: 19.09.2022 CN 202211139954
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Walaski, Jan Filip
(86) International application number: PCT/CN2023/118131
(87) International publication number: WO 2024/061045

(57) **Abstract**

Embodiments of the present invention provide an information processing method and a communication device. The method includes: performing a first operation, where the first operation includes at least one of the following: an operation related to a first duration and/or a first timer; an operation related to a second duration and/or a second timer; performing a first action within a first time period, at a first time, and/or at a time after a first time; performing a second action within a first time period, at a second time, and/or at a time after a second time; performing a third action within a second time period, beyond a first time period, at a third time, and/or at a time after a third time; performing a fourth action within a second time period, beyond a first time period, at a fourth time, and/or at a time after a fourth time; if a first condition is met, performing a first action; if a second condition is met, performing a second action; if a third condition is met, performing a third action; or if a fourth condition is met, performing a fourth action.

## Description

### CROSS-REFERENCE TO RELATED APPLICATIONS

This application claims priority to Chinese Patent Application No. 202211139954.1, filed in China on September 19, 2022, which is incorporated herein by reference in its entirety.

### TECHNICAL FIELD

Embodiments of the present invention relate to the field of wireless communication technologies, and in particular, to an information processing method and a communication device.

### BACKGROUND

An external application or a terminal may subscribe to congestion status information of a service data flow from a 5th Generation (5th Generation, 5G) communication system (5G System, 5GS). Congestion in the 5GS mainly occurs on an air interface. In the related art, congestion monitoring and reporting are mainly performed by a radio access network (Radio Access Network, RAN). In addition, user equipment (User Equipment, UE) may also monitor uplink congestion.

In the related art, in a scenario in which the terminal is handed over from a source RAN to a target RAN, a congestion status of the terminal in the source RAN may be different from that in the target RAN. The terminal is not congested in the target RAN, and a target RAN network element may take no action. A server or a client, unaware that a serving RAN network element has changed, may consider that the congestion continues.

As can be learned from the above, a problem in the related art is that the congestion status information is not updated in a timely manner, which may reduce a throughput of the service data flow.

### SUMMARY

Embodiments of the present invention provide an information processing method and a communication device to resolve a problem of how to update congestion status information in a timely manner.

To resolve the foregoing technical problem, the present invention is implemented as follows:

According to a first aspect, an embodiment of the present invention provides an information processing method, including:
performing, by a first communication device, a first operation, where the first operation includes at least one of the following:
an operation related to a first duration and/or a first timer;
an operation related to a second duration and/or a second timer;
performing a first action within a first time period, at a first time, and/or at a time after a first time;
performing a second action within a first time period, at a second time, and/or at a time after a second time;
performing a third action within a second time period, beyond a first time period, at a third time, and/or at a time after a third time;
performing a fourth action within a second time period, beyond a first time period, at a fourth time, and/or at a time after a fourth time;
if a first condition is met, performing a first action, where the first action includes reporting congestion information by using an uplink data packet of a first quality of service QoS flow, and that a first condition is met includes at least one of the following:
   a congestion reporting condition is met or congestion occurs;
   a transition from meeting a congestion reporting condition to not meeting a congestion reporting condition occurs, or a transition from not meeting a congestion reporting condition to meeting a congestion reporting condition occurs;
   a transition from congestion to no congestion occurs, or a transition from no congestion to congestion occurs;
   a terminal leaves the first communication device;
   a first object is released;
   a real uplink data packet of the first QoS flow exists at a first start time, at a first end time, within a first time interval, and/or within a first time period;
   within a first time period, at a first start time, at a time after a first start time, at a first end time, and/or at a time after a first end time; or
   within a first time period, at a first time, and/or at a time after a first time;
   if a second condition is met, performing a second action, where the second action includes at least one of the following: generating a first dummy data packet, or reporting congestion information by using a first dummy data packet, and that a second condition is met includes at least one of the following:
      a congestion reporting condition is met or congestion occurs;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first start time, at a first end time, within a first time interval, and/or within a first time period;
      a first timer stops, or a first timer expires;
      a terminal leaves the first communication device;
      a first object is released;
      within a first time period, at a first start time, at a time after a first start time, at a first end time, and/or at a time after a first end time; or
      within a first time period, at a second time, and/or at a time after a second time;
      if a third condition is met, performing a third action, where the third action includes one of the following: stopping reporting congestion information by using an uplink data packet of a first QoS flow, stopping generating a first dummy data packet, not reporting first status information by using an uplink data packet of a first QoS flow, or reporting first information by using an uplink data packet of a first QoS flow, where the first status information includes at least one of the following: a first bit, the congestion information, and/or the first information, and that a third condition is met includes at least one of the following:
         a congestion reporting condition is no longer met, congestion ends, a congestion reporting condition is not met, or there is no congestion;
         a transition from meeting a congestion reporting condition to not meeting a congestion reporting condition occurs, or a transition from not meeting a congestion reporting condition to meeting a congestion reporting condition occurs;
         a transition from congestion to no congestion occurs, or a transition from no congestion to congestion occurs;
         a real uplink data packet of the first QoS flow exists at a first end time, within a second time interval, beyond a first time period, and/or within a second time period;
         within a second time period, beyond a first time period, at a first end time, and/or after a first end time; or

   within a second time period, beyond a first time period, at a third time, and/or at a time after a third time; or
      if a fourth condition is met, performing a fourth action, where the fourth action includes at least one of the following: generating a second dummy data packet, not carrying first status information in a second dummy data packet, or reporting first information by using a second dummy data packet, where the first status information includes at least one of the following: a first bit, congestion information, and/or the first information, and that a fourth condition is met includes at least one of the following:
      a congestion reporting condition is no longer met, congestion ends, a congestion reporting condition is not met, or there is no congestion;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first end time, within a second time interval, beyond a first time period, and/or within a second time period;
      a second timer stops, or a second timer expires;
      a terminal leaves the first communication device;
      a first object is released;
      within a second time period, beyond a first time period, at a first end time, and/or after a first end time; or
   within a second time period, beyond a first time period, at a fourth time, and/or at a time after a fourth time;
      where
      the first dummy data packet is a dummy data packet in an uplink direction in the first QoS flow;
      the second dummy data packet is a dummy data packet in the uplink direction in the first QoS flow; and
      the first object includes at least one of the following: the first QoS flow, a first radio bearer, and first logical information;
      where
      the first time includes one of the following: the first start time, the first end time, a time when the terminal leaves the first communication device, a time when the first object is released, the time after the first start time, the time after the first end time, a time after the terminal leaves the first communication device, or a time after the first object is released;
      the time after the first time includes one of the following: the time after the first start time, the time after the first end time, the time after the terminal leaves the first communication device, or the time after the first object is released;
      the second time includes one of the following: the first start time, the first end time, an end time of the first time interval, a time when the first timer expires, a time when the first timer stops, the time when the terminal leaves the first communication device, the time when the first object is released, the time after the first start time, the time after the first end time, a time after the end of the first time interval, a time after the first timer expires, a time after the first timer stops, the time after the terminal leaves the first communication device, or the time after the first object is released;
      the time after the second time includes one of the following: the time after the first start time, the time after the first end time, the time after the end of the first time interval, the time after the first timer expires, the time after the first timer stops, the time after the terminal leaves the first communication device, or the time after the first object is released;
      the third time includes one of the following: the first end time, the time when the terminal leaves the first communication device, the time when the first object is released, the time after the first end time, the time after the terminal leaves the first communication device, the time after the first object is released, or a time beyond the first time period;
      the time after the third time includes one of the following: the time after the first end time, the time after the terminal leaves the first communication device, the time after the first object is released, or the time beyond the first time period;
      the fourth time includes one of the following: the first end time, an end time of the second time interval, a time when the second timer expires, a time when the second timer stops, the time when the terminal leaves the first communication device, the time when the first object is released, the time after the first end time, a time after the end of the second time interval, a time after the second timer expires, a time after the second timer stops, the time after the terminal leaves the first communication device, the time after the first object is released, or the time beyond the first time period; and
      the time after the fourth time includes one of the following: the time after the first end time, the time after the end of the second time interval, the time after the second timer expires, the time after the second timer stops, the time after the terminal leaves the first communication device, the time after the first object is released, or the time beyond the first time period;
      where
      the first time period is one of the following: a time period between the first start time and the first end time, or a time period when the congestion occurs;
      the first start time is one of the following: a time when the congestion reporting condition is met or the congestion occurs, or a time after the congestion reporting condition is met or the congestion occurs; and
      the first end time is one of the following: a time when a last uplink data packet carrying congestion information is sent, a time when the congestion reporting condition is no longer met or the congestion ends, a time when the congestion reporting condition is not met or there is no congestion, the time when the terminal leaves the first communication device, the time when the first object is released, the time when the first timer stops, the time when the second timer stops, a time after the last uplink data packet carrying the congestion information is sent, a time after the congestion reporting condition is no longer met or the congestion ends, a time after the congestion reporting condition is not met or there is no congestion, the time after the terminal leaves the first communication device, the time after the first object is released, the time after the first timer stops, or the time after the second timer stops;
      where
      the second time period is one of the following: a time period between the second start time and the second end time, or a time period when the congestion ends or there is no congestion;
      the second start time is one of the following: the time when the last uplink data packet carrying the congestion information is sent, the time when the congestion reporting condition is no longer met or the congestion ends, the time when the congestion reporting condition is not met or there is no congestion, the time after the last uplink data packet carrying the congestion information is sent, the time after the congestion reporting condition is no longer met or the congestion ends, or the time after the congestion reporting condition is not met or there is no congestion; and
      the second end time is one of the following: the time when the congestion reporting condition is met or the congestion occurs, the time after the congestion reporting condition is met or the congestion occurs, the time when the terminal leaves the first communication device, the time when the first object is released, the time when the second timer stops, the time after the terminal leaves the first communication device, the time after the first object is released, or the time after the second timer stops;
      where
      the first time interval is a time interval based on the first start time; and
      the second time interval is a time interval based on the first end time.

According to a second aspect, an embodiment of the present invention provides an information processing method, including:
performing, by a second communication device, a second operation, where the second operation includes at least one of the following:
modifying a congestion marking in an uplink data packet to a value used to indicate occurrence of congestion;
stopping modifying a congestion marking in an uplink data packet to a value used to indicate occurrence of congestion;
modifying a congestion marking in a downlink data packet to a value used to indicate occurrence of congestion;
stopping modifying a congestion marking in a downlink data packet to a value used to indicate occurrence of congestion;
performing a fifth action, where the fifth action includes at least one of the following:
   sending second information;
   saving or updating congestion information;
   modifying a status of a first object to a congested state;
   modifying a congestion marking in a data packet to a value used to indicate occurrence of congestion; or
   discarding an uplink dummy data packet, where the uplink dummy data packet includes a first dummy data packet and/or a second dummy data packet; or
   performing a sixth action, where the sixth action includes at least one of the following:
      sending third information;
      deleting congestion information;
      modifying a status of a first object to an uncongested state;
      stopping modifying a congestion marking in a data packet to a value used to indicate occurrence of congestion; or
      discarding an uplink dummy data packet, where the uplink dummy data packet includes a first dummy data packet and/or a second dummy data packet;
      where
      the second information includes at least one of the following:
         information used to indicate start of the congestion or occurrence of the congestion;
         information used to indicate a congestion level;
         information used to indicate a congestion direction;
         information used to indicate start of uplink congestion or occurrence of uplink congestion; or
         information used to indicate start of downlink congestion or occurrence of downlink congestion; and
         the third information includes at least one of the following:
            information used to indicate end of the congestion or no congestion;
            information used to indicate the congestion direction;
            information used to indicate end of the uplink congestion or no uplink congestion; or
            information used to indicate end of the downlink congestion or no downlink congestion.

According to a third aspect, an embodiment of the present invention provides an information processing apparatus, applied to a first communication device and including:
a first execution module, configured to perform a first operation, where the first operation includes at least one of the following:
an operation related to a first duration and/or a first timer;
an operation related to a second duration and/or a second timer;
performing a first action within a first time period, at a first time, and/or at a time after a first time;
performing a second action within a first time period, at a second time, and/or at a time after a second time;
performing a third action within a second time period, beyond a first time period, at a third time, and/or at a time after a third time;
performing a fourth action within a second time period, beyond a first time period, at a fourth time, and/or at a time after a fourth time;
if a first condition is met, performing a first action, where the first action includes reporting congestion information by using an uplink data packet of a first quality of service QoS flow, and that a first condition is met includes at least one of the following:
   a congestion reporting condition is met or congestion occurs;
   a transition from meeting a congestion reporting condition to not meeting a congestion reporting condition occurs, or a transition from not meeting a congestion reporting condition to meeting a congestion reporting condition occurs;
   a transition from congestion to no congestion occurs, or a transition from no congestion to congestion occurs;
   a terminal leaves the first communication device;
   a first object is released;
   a real uplink data packet of the first QoS flow exists at a first start time, at a first end time, within a first time interval, and/or within a first time period;
   within a first time period, at a first start time, at a time after a first start time, at a first end time, and/or at a time after a first end time; or
   within a first time period, at a first time, and/or at a time after a first time;
   if a second condition is met, performing a second action, where the second action includes at least one of the following: generating a first dummy data packet, or reporting congestion information by using a first dummy data packet, and that a second condition is met includes at least one of the following:
      a congestion reporting condition is met or congestion occurs;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first start time, at a first end time, within a first time interval, and/or within a first time period;
      a first timer stops, or a first timer expires;
      a terminal leaves the first communication device;
      a first object is released;
      within a first time period, at a first start time, at a time after a first start time, at a first end time, and/or at a time after a first end time; or
      within a first time period, at a second time, and/or at a time after a second time;
      if a third condition is met, performing a third action, where the third action includes one of the following: stopping reporting congestion information by using an uplink data packet of a first QoS flow, stopping generating a first dummy data packet, not reporting first status information by using an uplink data packet of a first QoS flow, or reporting first information by using an uplink data packet of a first QoS flow, where the first status information includes at least one of the following: a first bit, the congestion information, and/or the first information, and that a third condition is met includes at least one of the following:
         a congestion reporting condition is no longer met, congestion ends, a congestion reporting condition is not met, or there is no congestion;
         a transition from meeting a congestion reporting condition to not meeting a congestion reporting condition occurs, or a transition from not meeting a congestion reporting condition to meeting a congestion reporting condition occurs;
         a transition from congestion to no congestion occurs, or a transition from no congestion to congestion occurs;
         a real uplink data packet of the first QoS flow exists at a first end time, within a second time interval, beyond a first time period, and/or within a second time period;
         within a second time period, beyond a first time period, at a first end time, and/or after a first end time; or

   within a second time period, beyond a first time period, at a third time, and/or at a time after a third time; or
      if a fourth condition is met, performing a fourth action, where the fourth action includes at least one of the following: generating a second dummy data packet, not carrying first status information in a second dummy data packet, or reporting first information by using a second dummy data packet, where the first status information includes at least one of the following: a first bit, congestion information, and/or the first information, and that a fourth condition is met includes at least one of the following:
      a congestion reporting condition is no longer met, congestion ends, a congestion reporting condition is not met, or there is no congestion;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first end time, within a second time interval, beyond a first time period, and/or within a second time period;
      a second timer stops, or a second timer expires;
      a terminal leaves the first communication device;
      a first object is released;
      within a second time period, beyond a first time period, at a first end time, and/or after a first end time; or
   within a second time period, beyond a first time period, at a fourth time, and/or at a time after a fourth time;
      where
      the first dummy data packet is a dummy data packet in an uplink direction in the first QoS flow;
      the second dummy data packet is a dummy data packet in the uplink direction in the first QoS flow; and
      the first object includes at least one of the following: the first QoS flow, a first radio bearer, and first logical information;
      where
      the first time includes one of the following: the first start time, the first end time, a time when the terminal leaves the first communication device, a time when the first object is released, the time after the first start time, the time after the first end time, a time after the terminal leaves the first communication device, or a time after the first object is released;
      the time after the first time includes one of the following: the time after the first start time, the time after the first end time, the time after the terminal leaves the first communication device, or the time after the first object is released;
      the second time includes one of the following: the first start time, the first end time, an end time of the first time interval, a time when the first timer expires, a time when the first timer stops, the time when the terminal leaves the first communication device, the time when the first object is released, the time after the first start time, the time after the first end time, a time after the end of the first time interval, a time after the first timer expires, a time after the first timer stops, the time after the terminal leaves the first communication device, or the time after the first object is released;
      the time after the second time includes one of the following: the time after the first start time, the time after the first end time, the time after the end of the first time interval, the time after the first timer expires, the time after the first timer stops, the time after the terminal leaves the first communication device, or the time after the first object is released;
      the third time includes one of the following: the first end time, the time when the terminal leaves the first communication device, the time when the first object is released, the time after the first end time, the time after the terminal leaves the first communication device, the time after the first object is released, or a time beyond the first time period;
      the time after the third time includes one of the following: the time after the first end time, the time after the terminal leaves the first communication device, the time after the first object is released, or the time beyond the first time period;
      the fourth time includes one of the following: the first end time, an end time of the second time interval, a time when the second timer expires, a time when the second timer stops, the time when the terminal leaves the first communication device, the time when the first object is released, the time after the first end time, a time after the end of the second time interval, a time after the second timer expires, a time after the second timer stops, the time after the terminal leaves the first communication device, the time after the first object is released, or the time beyond the first time period; and
      the time after the fourth time includes one of the following: the time after the first end time, the time after the end of the second time interval, the time after the second timer expires, the time after the second timer stops, the time after the terminal leaves the first communication device, the time after the first object is released, or the time beyond the first time period;
      where
      the first time period is one of the following: a time period between the first start time and the first end time, or a time period when the congestion occurs;
      the first start time is one of the following: a time when the congestion reporting condition is met or the congestion occurs, or a time after the congestion reporting condition is met or the congestion occurs; and
      the first end time is one of the following: a time when a last uplink data packet carrying congestion information is sent, a time when the congestion reporting condition is no longer met or the congestion ends, a time when the congestion reporting condition is not met or there is no congestion, the time when the terminal leaves the first communication device, the time when the first object is released, the time when the first timer stops, the time when the second timer stops, a time after the last uplink data packet carrying the congestion information is sent, a time after the congestion reporting condition is no longer met or the congestion ends, a time after the congestion reporting condition is not met or there is no congestion, the time after the terminal leaves the first communication device, the time after the first object is released, the time after the first timer stops, or the time after the second timer stops;
      where
      the second time period is one of the following: a time period between the second start time and the second end time, or a time period when the congestion ends or there is no congestion;
      the second start time is one of the following: the time when the last uplink data packet carrying the congestion information is sent, the time when the congestion reporting condition is no longer met or the congestion ends, the time when the congestion reporting condition is not met or there is no congestion, the time after the last uplink data packet carrying the congestion information is sent, the time after the congestion reporting condition is no longer met or the congestion ends, or the time after the congestion reporting condition is not met or there is no congestion; and
      the second end time is one of the following: the time when the congestion reporting condition is met or the congestion occurs, the time after the congestion reporting condition is met or the congestion occurs, the time when the terminal leaves the first communication device, the time when the first object is released, the time when the second timer stops, the time after the terminal leaves the first communication device, the time after the first object is released, or the time after the second timer stops;
      where
      the first time interval is a time interval based on the first start time; and
      the second time interval is a time interval based on the first end time.

According to a fourth aspect, an embodiment of the present invention provides an information processing apparatus, applied to a second communication device and including:
a second execution module, configured to perform a second operation, where the second operation includes at least one of the following:
modifying a congestion marking in an uplink data packet to a value used to indicate occurrence of congestion;
stopping modifying a congestion marking in an uplink data packet to a value used to indicate occurrence of congestion;
modifying a congestion marking in a downlink data packet to a value used to indicate occurrence of congestion;
stopping modifying a congestion marking in a downlink data packet to a value used to indicate occurrence of congestion;
performing a fifth action, where the fifth action includes at least one of the following:
sending second information;
saving or updating congestion information;
modifying a status of a first object to a congested state;
modifying a congestion marking in a data packet to a value used to indicate occurrence of congestion; or
discarding an uplink dummy data packet, where the uplink dummy data packet includes a first dummy data packet and/or a second dummy data packet; or
performing a sixth action, where the sixth action includes at least one of the following:
   sending third information;
   deleting congestion information;
   modifying a status of a first object to an uncongested state;
   stopping modifying a congestion marking in a data packet to a value used to indicate occurrence of congestion; or
   discarding an uplink dummy data packet, where the uplink dummy data packet includes a first dummy data packet and/or a second dummy data packet;
   where
   the second information includes at least one of the following:
      information used to indicate start of the congestion or occurrence of the congestion;
      information used to indicate a congestion level;
      information used to indicate a congestion direction;
      information used to indicate start of uplink congestion or occurrence of uplink congestion; or
      information used to indicate start of downlink congestion or occurrence of downlink congestion; and
      the third information includes at least one of the following:
         information used to indicate end of the congestion or no congestion;
         information used to indicate the congestion direction;
         information used to indicate end of the uplink congestion or no uplink congestion; or
         information used to indicate end of the downlink congestion or no downlink congestion.

According to a fifth aspect, an embodiment of the present invention provides a communication device, including a processor, a memory, and a computer program stored in the memory and capable of running on the processor, where when the computer program is executed by the processor, the steps of the information processing method provided in the first aspect are implemented, or the steps of the information processing method provided in the second aspect are implemented.

According to a sixth aspect, a communication system is provided and includes a first communication device and a second communication device. The first communication device may be configured to perform the steps of the method according to the first aspect. The second communication device may be configured to perform the steps of the method according to the second aspect.

According to a seventh aspect, an embodiment of the present invention provides a computer-readable storage medium. The computer-readable storage medium stores a computer program. When the computer program is executed by a processor, the steps of the method provided in the first aspect are implemented, or the steps of the method provided in the second aspect are implemented, or the steps of the multi-card optimization method provided in the third aspect are implemented.

According to an eighth aspect, a chip is provided. The chip includes a processor and a communication interface. The communication interface is coupled to the processor. The processor is configured to run a program or instructions to implement the method according to the first aspect or implement the method according to the second aspect.

According to a ninth aspect, a computer program or program product is provided. The computer program or program product is stored in a storage medium. The computer program or program product is executed by at least one processor to implement the steps of the method according to the first aspect or implement the steps of the method according to the second aspect.

In the embodiments of the present invention, when there is congestion, the first communication device reports the congestion to implement an explicit congestion indication, and when there is no congestion, stops reporting the congestion to implicitly indicate that the congestion ends. In this way, the congestion status can be updated in real time, so that a core network, a server, or a client can know the congestion status in a timely manner even if a RAN network element has changed, thereby ensuring a throughput of the service data flow. In addition, the embodiments of the present invention clearly define how to report information at a critical point of the transition from meeting the congestion reporting condition to not meeting the congestion reporting condition, thereby ensuring an accurate indication of the congestion status.

### BRIEF DESCRIPTION OF DRAWINGS

A person of ordinary skill in the art can clearly understand various other advantages and benefits by reading the detailed description of the preferred embodiments below. The accompanying drawings are merely intended to illustrate the objectives of the preferred embodiments and are not intended to limit the present invention. Throughout the accompanying drawings, same reference numerals represent same components. In the accompanying drawings:
FIG. 1 is a schematic architectural diagram of a wireless communication system according to an embodiment of the present invention;
FIG. 2 is a first flowchart of an information processing method according to an embodiment of the present invention;
FIG. 3 is a second flowchart of an information processing method according to an embodiment of the present invention;
FIG. 4 is a schematic diagram of a sending state of an uplink data packet in a case that an uplink data packet corresponding to a first QoS flow exists according to an embodiment of the present invention;
FIG. 5a is a first schematic diagram of a sending state of an uplink data packet in a case that no uplink data packet corresponding to a first QoS flow exists according to an embodiment of the present invention;
FIG. 5b is a second schematic diagram of a sending state of an uplink data packet in a case that no uplink data packet corresponding to a first QoS flow exists according to an embodiment of the present invention;
FIG. 5c is a third schematic diagram of a sending state of an uplink data packet in a case that no uplink data packet corresponding to a first QoS flow exists according to an embodiment of the present invention;
FIG. 6a is a first schematic diagram of a sending state of an uplink data packet in a case that no uplink data packet corresponding to a first QoS flow exists and that a start time of a first time period is after a time when a congestion reporting condition is met or congestion occurs according to an embodiment of the present invention;
FIG. 6b is a second schematic diagram of a sending state of an uplink data packet in a case that no uplink data packet corresponding to a first QoS flow exists and that a start time of a first time period is after a time when a congestion reporting condition is met or congestion occurs according to an embodiment of the present invention;
FIG. 6c is a third schematic diagram of a sending state of an uplink data packet in a case that no uplink data packet corresponding to a first QoS flow exists and that a start time of a first time period is after a time when a congestion reporting condition is met or congestion occurs according to an embodiment of the present invention;
FIG. 7a is a first schematic diagram of a sending state of an uplink data packet in a case that no uplink data packet corresponding to a first QoS flow exists and that a transmission time of a first dummy data packet is shifted backward by a time interval from a start time and an end time of a first time period respectively according to an embodiment of the present invention;
FIG. 7b is a second schematic diagram of a sending state of an uplink data packet in a case that no uplink data packet corresponding to a first QoS flow exists and that a transmission time of a first dummy data packet is shifted backward by a time interval from a start time and an end time of a first time period respectively according to an embodiment of the present invention;
FIG. 7c is a third schematic diagram of a sending state of an uplink data packet in a case that no uplink data packet corresponding to a first QoS flow exists and that a transmission time of a first dummy data packet is shifted backward by a time interval from a start time and an end time of a first time period respectively according to an embodiment of the present invention;
FIG. 8a is a first schematic diagram of a sending state of an uplink data packet in a case that no uplink data packet corresponding to a first QoS flow exists and a first timer is reused according to an embodiment of the present invention;
FIG. 8b is a second schematic diagram of a sending state of an uplink data packet in a case that no uplink data packet corresponding to a first QoS flow exists and a first timer is reused according to an embodiment of the present invention;
FIG. 8c is a third schematic diagram of a sending state of an uplink data packet in a case that no uplink data packet corresponding to a first QoS flow exists and a first timer is reused according to an embodiment of the present invention;
FIG. 9 is a schematic diagram of a sending state of an uplink data packet in a case that no uplink data packet corresponding to a first QoS flow exists and a first timer is used only once according to an embodiment of the present invention;
FIG. 10a is a first schematic diagram of a sending state of an uplink data packet in a case that no uplink data packet corresponding to a first QoS flow exists and a second timer is reused according to an embodiment of the present invention;
FIG. 10b is a second schematic diagram of a sending state of an uplink data packet in a case that no uplink data packet corresponding to a first QoS flow exists and a second timer is reused according to an embodiment of the present invention;
FIG. 11a is a first schematic diagram of a sending state of an uplink data packet in a case that no uplink data packet corresponding to a first QoS flow exists and a second timer is used only once according to an embodiment of the present invention;
FIG. 11b is a second schematic diagram of a sending state of an uplink data packet in a case that no uplink data packet corresponding to a first QoS flow exists and a second timer is used only once according to an embodiment of the present invention;
FIG. 12 is a first schematic flowchart of a specific application according to an embodiment of the present invention;
FIG. 13 is a second schematic flowchart of a specific application according to an embodiment of the present invention;
FIG. 14 is a first structural diagram of an information processing apparatus according to the present invention;
FIG. 15 is a second structural diagram of an information processing apparatus according to the present invention; and
FIG. 16 is a structural diagram of a communication device according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In the embodiments of the present invention, terms such as "an example" or "for example" are used to represent examples, illustrations, or explanations. Any embodiment or design solution described as "an example" or "for example" in the embodiments of the present invention should not be construed as being more preferred or advantageous than other embodiments or design solutions. Exactly, use of the term "example" or "for example" or the like is intended to present a relative concept in a specific manner.

Technologies described in this specification are not limited to a 5th Generation mobile communication (5th generation, 5G) system and a later evolved communication system, and are not limited to a long term evolution (Long Term Evolution, LTE)/LTE-Advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems.

The terms "system" and "network" are usually used interchangeably. The CDMA system can implement radio technologies such as CDMA2000 and universal terrestrial radio access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communications, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. The UTRA and E-UTRA are parts of a universal mobile telecommunications system (Universal Mobile Telecommunications System, UMTS). The LTE and more advanced LTE (such as LTE-A) are new UMTS releases that use the E-UTRA. The UTRA, E-UTRA, UMTS, LTE, LTE-A, and GSM are cited from descriptions of documents of an organization named "3rd Generation Partnership Project" (3rd Generation Partnership Project, 3GPP). The CDMA2000 and UMB are cited from descriptions of documents of the organization named "3rd Generation Partnership Project 2" (3GPP2). The technologies described in this specification may be used for the foregoing systems and radio technologies, and may also be used for other systems and radio technologies.

First, the following technical points are described to facilitate better understanding of the embodiments of the present invention.

In the related art, congestion is reported in a plurality of manners.

Manner 1: A RAN performs an explicit congestion notification (Explicit Congestion Notification, ECN) or low latency, low loss, scalable throughput (Low Latency, Low Loss, Scalable Throughput, L4S) marking on a data packet.

Manner 2: A RAN reports congestion information to a core network (Core Network, CN) user plane network element (such as a user plane function (User Plane Function, UPF)), and the UPF performs an ECN or ECN marking for L4S.

Manner 3: A RAN reports congestion information to a CN user plane network element (such as a UPF), the UPF reports the congestion information to a CN control plane network element (for example, one of an access and mobility management function (Access Management Function, AMF), a session management function (Session Management Function, SMF), or a policy control function (Policy Control Function, PCF)), and a CN network element (for example, one of a network exposure function (Network Exposure Function, NEF) or the PCF) exposes congestion status information.

Manner 4: A RAN reports congestion information to a CN control plane network element (for example, one of an AMF, an SMF, or a PCF), and the CN (for example, one of a NEF and the PCF) exposes congestion status information.

Currently, the following scenarios also need to be resolved.

Scenario 1: In a scenario in which a terminal is handed over from a source RAN to a target RAN, if a first object is congested in the source RAN and a first congestion level or start of the congestion of the first object is reported, after the terminal is handed over to the target RAN, the congestion of the first object may no longer persist or the first congestion level may no longer persist. However, the target RAN does not know that the source RAN has reported congestion information of the first object. Therefore, the target RAN does not report congestion related information of the first object. In this case, a server or a client considers that the congestion of the first object persists.

Scenario 2: A radio link failure (Radio link failure) may occur on a connection of UE in a RAN. Therefore, in a case of RRC reestablishment to a new RAN, the RAN may be unable to obtain a UE context (including latest congestion information, a congestion level, or the like) of the UE in the previous RAN.

A solution is as follows: In a case that a congestion reporting condition is met (for example, the congestion starts or the congestion level is reached), a RAN network element continuously allows uplink data packets to carry congestion information, until the congestion reporting condition is no longer met (for example, the congestion ends). Because the RAN network element allows an uplink data packet to carry the congestion information, the end of the congestion is implicitly indicated. Therefore, in a case that the terminal moves to another RAN, a QoS flow is not congested. In this case, there is no action, and "no action" is equivalent to an implicit indication of the end of the congestion or no congestion.

However, the following problems also need to be resolved.

Problem 1: When downlink congestion occurs, there may be no uplink data packet. In this case, how to report uplink congestion information needs to be resolved.

Problem 2: "A transition from meeting the congestion reporting condition to not meeting the congestion reporting condition" is a critical point, which can represent both a last time of the congestion and a start time of no congestion. In this case, whether to report congestion information, or not to report congestion information, or to implicitly indicate no congestion, or to explicitly report no congestion is unclear, and needs to be resolved.

It is the same with "a transition from not meeting the congestion reporting condition to meeting the congestion reporting condition".

Problem 2: A QoS flow of the UE is congested in a first communication device. Whether the first communication device reports congestion information for the last time when the UE is handed over from the first communication device to another communication device or leaves the first communication device is unclear and needs to be resolved.

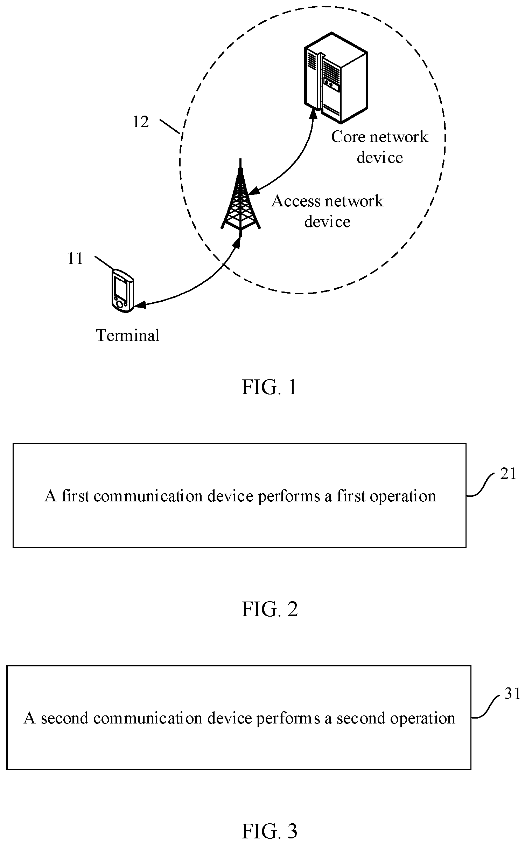

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

Optionally, obtaining may be understood as obtaining from a configuration, receiving, receiving by requesting, obtaining by self-learning, obtaining by deducing based on unreceived information, or obtaining after processing based on received information, which may be specifically determined based on actual requirements and is not limited in the embodiments of the present invention. For example, when specific capability indication information sent by a device is not received, it may be deduced that the device does not support the capability.

Optionally, sending may include broadcasting, broadcasting in system information, or returning in response to a request.

In an optional embodiment of the present invention, a communication device may include at least one of the following: a communication network element and a terminal.

In an embodiment of the present invention, the communication network element may include at least one of the following: a core network element and a radio access network element.

In an embodiment of the present invention, a core network (Core Network, CN) network element may include but is not limited to at least one of the following: a core network device, a core network node, a core network function, a core network element, a mobility management entity (Mobility Management Entity, MME), an access and mobility management function (Access Management Function, AMF), a session management function (Session Management Function, SMF), a user plane function (User Plane Function, UPF), a serving gateway (Serving GW, SGW), a PDN gateway (PDN Gate Way, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), or an application function (Application Function).

In an embodiment of the present invention, the RAN network element may include but is not limited to at least one of the following: a radio access network device, a radio access network node, a radio access network function, a radio access network element, a 3GPP radio access network, a non-3GPP radio access network, a centralized unit (Centralized Unit, CU), a distributed unit (Distributed Unit, DU), a base station, an evolved NodeB (evolved NodeB, eNB), a 5G NodeB (gNB), a radio network controller (Radio Network Controller, RNC), a NodeB (NodeB), a non-3GPP interworking function (Non-3GPP Inter Working Function, N3IWF), an access controller (Access Controller, AC) node, an access point (Access Point, AP) device, a wireless local area network (Wireless Local Area Network, WLAN) node, or an N3IWF.

A base station may be a base transceiver station (BTS, Base Transceiver Station) in GSM or CDMA, or may be a NodeB (NodeB) in WCDMA, or may be an evolved NodeB (eNB or e-Node B, evolutional NodeB) in LTE or a 5G NodeB (gNB), which is not limited in the embodiments of the present invention.

In an optional embodiment of the present invention, UE may include at least one of the following: a terminal device, a terminal device with a card, or a card.

In an optional embodiment of the present invention, a card may include one of the following: a SIM card, a USIM card, or an eSIM.

In an optional embodiment of the present invention, a terminal may include a relay supporting a terminal function and/or a terminal supporting a relay function. The terminal may also be referred to as a terminal device or user equipment (User Equipment, UE). The terminal may be a terminal-side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or a vehicle-mounted device. It should be noted that a specific type of the terminal is not limited in the embodiments of the present invention.

In an optional embodiment of this application, the communication network element may include at least one of the following: a core network element and a radio access network element.

In an embodiment of this application, reporting represents one of the following: notifying or sending.

In an embodiment of this application, a monitoring (for example, monitor) requirement includes at least one of the following: supervising, detecting, measuring, or reporting.

In an embodiment of this application, monitoring may also be referred to as at least one of the following: supervising, detecting, or measuring.

In an optional embodiment of the present invention, that the terminal accesses a first communication device includes one of the following: an access request of the terminal is received, the terminal completes access to the first communication device, the terminal enters a connected state (for example, an RRC_connected state) in the first communication device, a request for establishing or resuming a connection between the terminal and the first communication device is received, or the terminal is transferred from another communication device to the first communication device.

In an implementation, the access request includes at least one of the following: a request for establishing or resuming a terminal context, a request for moving the terminal to the first communication device (terminal handover request or terminal handover requirement), a request for establishing or resuming the connection between the terminal and the first communication device (RRC establishment request, RRC resume request, or RRC reestablishment request), or a request for establishing or resuming a connection between the first communication device and a CN for the terminal.

In an implementation, the access completion includes at least one of the following: completion of establishing or resuming the terminal context, completion of moving the terminal to the first communication device (terminal handover complete), completion of establishing or resuming the connection between the terminal and the first communication device (RRC establishment complete, RRC resume complete, or RRC reestablishment complete), or completion of establishing or resuming the connection between the first communication device and the CN for the terminal.

In an optional embodiment of the present invention, that the terminal leaves the first communication device includes one of the following: a leave request of the terminal is received, a leave request of the terminal is sent, the terminal completes leaving from the first communication device, the terminal enters an idle state or an inactive state (such as RRC inactive) in the first communication device, a request for moving the terminal out of the first communication device is sent, a request for obtaining the terminal context is received, a response for obtaining the terminal context is sent, or the terminal is transferred from the first communication device to another communication device (such as another RAN network element).

In an implementation, the leave request includes at least one of the following: a request for releasing or suspending the terminal context, a request for releasing or suspending the connection between the terminal and the first communication device (such as an RRC release request or RRC suspension request), a request for moving the terminal out of the first communication device (the terminal handover request is sent or the terminal handover requirement is sent), or a request for releasing or suspending the connection between the first communication device and the CN for the terminal.

In an implementation, completion of leaving includes at least one of the following: completion of releasing or suspending the terminal context, completion of releasing or suspending the connection between the terminal and the first communication device (such as an RRC release request or RRC suspension request), completion of moving the terminal out of the first communication device (the terminal handover request is sent or the terminal handover requirement is sent), or completion of releasing or suspending the connection between the first communication device and the CN for the terminal.

In an optional embodiment of the present invention, that the terminal is transferred from the first communication device to another communication device includes one of the following: the terminal is handed over from the first communication device to the other communication device (for example, through handover), or the terminal moves from the first communication device to the other communication device (for example, through redirection).

In an optional embodiment of the present invention, that the terminal is transferred from another communication device to the first communication device includes one of the following: the terminal is handed over from the other communication device to the first communication device, or the terminal moves from the other communication device to the first communication device.

That a first object is established includes one of the following: a request for establishing the first object is received, or the establishment of the first object is completed.

That the first object is released includes one of the following: a request for releasing the first object is received or sent, or the release of the first object is completed.

A transition from congestion to no congestion is a critical point between the congestion and no congestion, which can represent both a last time of the congestion and a start time of no congestion.

A transition from no congestion to congestion is a critical point between no congestion and the congestion, which can represent both a last time of no congestion and a start time of the congestion.

In an implementation, in a case that meeting a congestion reporting condition includes a transition from congestion to no congestion, not meeting the congestion reporting condition does not include a transition from congestion to no congestion, and vice versa.

In an implementation, in a case that meeting the congestion reporting condition includes a transition from no congestion to congestion, not meeting the congestion reporting condition does not include a transition from no congestion to congestion.

In an implementation, in a case that meeting the congestion reporting condition includes that the terminal leaves the first communication device, not meeting the congestion reporting condition does not include that the terminal leaves the first communication device, and vice versa.

In an implementation, in a case that meeting the congestion reporting condition includes that the first object is released in the first communication device, not meeting the congestion reporting condition does not include that the first object is released in the first communication device, and vice versa.

In an optional embodiment of the present invention, no congestion includes end of congestion.

In an implementation, end of congestion is a critical point from the congestion to no congestion, and therefore can represent both a last time of the congestion and a start time of no congestion.

In an optional embodiment of the present invention, not meeting the congestion reporting condition includes that the congestion reporting condition is no longer met.

In an implementation, that the congestion reporting condition is no longer met is a critical point from meeting the congestion reporting condition to not meeting the congestion reporting condition. Therefore, it can represent a last time when the congestion reporting condition is met, and can also represent a start time when the congestion reporting condition is not met.

In an implementation, that the congestion reporting condition is met is a critical point from not meeting the congestion reporting condition to meeting the congestion reporting condition. Therefore, it can represent a last time when the congestion reporting condition is not met, and can also represent a start time when the congestion reporting condition is met.

In an implementation, start of congestion is a critical point from no congestion to the congestion, and therefore can represent both a last time of no congestion and a start time of the congestion.

An uplink data packet of a first QoS flow includes one of the following: a real data packet in the first QoS flow, a first dummy data packet, or a second dummy data packet. In an implementation, the uplink data packet of the first QoS flow refers to the real data packet in the first QoS flow, for example, a data packet generated by a client and sent to a server.

In an optional embodiment of the present invention, a first time period is the time starting from a first start time and ending at a first end time.

In an implementation, the first time period or "within the first time period" may or may not include the first start time.

In an implementation, the first time period or "within the first time period" may or may not include the first end time.

In an optional embodiment of the present invention, "beyond a first time" includes a time after the first time, such as a time between the first end time and a second start time.

In an implementation, "beyond the first time or after the first time" includes or does not include the first end time.

In an optional embodiment of the present invention, a second time period is the time starting from a second start time and ending at a second end time.

In an implementation, "within the second time period" may or may not include the second start time.

In an implementation, "within the second time period" may or may not include the second end time.

In an optional embodiment of the present invention, the time can be understood as one of the following: a moment, a time point, or a time period.

In an implementation, that the congestion information reporting condition is met includes a transition from not meeting the congestion reporting condition to meeting the congestion reporting condition.

In an implementation, occurrence of congestion includes a transition from end of congestion or no congestion to the congestion.

In an implementation, that the congestion information reporting condition is no longer met includes a transition from meeting the congestion reporting condition to not meeting the congestion reporting condition.

In an implementation, end of congestion includes a transition from the congestion to the end of the congestion or no congestion.

In an embodiment of the present invention, a data packet may be referred to as a PDU.

In an embodiment of the present invention, congestion may be degradation of network transmission performance due to limited resources of a transmission node when a quantity of packets transmitted in a packet-switched network is excessively large. Generally, when network congestion occurs, a data loss, a latency increase, or a throughput decrease occurs, and even congestion collapse (congestion collapse) is caused in severe cases.

In an embodiment of the present invention, congestion status information may be information indicating a congestion status such as the start of the congestion, the end of the congestion, a congestion level, or a congestion direction.

In an optional embodiment of this application, congestion monitoring may include at least one of the following: congestion status monitoring, congestion status measurement, and/or congestion status reporting. The congestion status includes at least one of the following: the start of the congestion or occurrence of the congestion, the end of the congestion or no congestion, congestion decline, or congestion escalation.

In an optional embodiment of this application, congestion of the first object refers to congestion of data transmission in the first object.

In an optional embodiment of this application, congestion status information of the first object refers to congestion status information of data transmission in the first object.

In an optional embodiment of this application, the congestion of the first object includes one of the following: QoS of the first object cannot be met, a data sending rate of the first object is lower than a data receiving rate of the first object, time-frequency resources are insufficient, a buffer overflows, or a queue overflows.

In an implementation, the time-frequency resources are insufficient. For example, time-frequency resources in a first cell are insufficient for transmitting all received data or buffered data.

In an implementation, the first object may be a first data radio bearer (Data Radio Bearer, DRB), and congestion of the first DRB includes one of the following: QoS of the first DRB cannot be met, or a data sending rate of the first DRB is lower than a data receiving rate of the first object. The QoS cannot be met. For example, the rate cannot be guaranteed, a packet loss rate cannot be guaranteed, a packet loss ratio cannot be guaranteed, or a PER cannot be guaranteed.

In an implementation, that a data sending rate of the first object is lower than a data receiving rate of the first object includes that a data sending rate of the first object sent to a first interface is lower than a data sending rate of the first object received from a second interface. The first interface or the second interface includes one of the following: a Uu interface, an N9 or N3 interface, or an N6 interface.

When the first interface is the Uu interface, the second interface may be the N3 interface.

When the first interface is the N3 interface, the second interface may be the Uu interface.

When the first interface is the N6 interface, the second interface may be the N3 or N9 interface.

When the first interface is the N3 or N9 interface, the second interface may be the N6 interface.

In an optional embodiment of this application, the QoS includes at least one of the following: a guaranteed bit rate (such as a guaranteed flow bit rate (Guaranteed Flow Bit Rate, GFBR)), a minimum transmission rate (such as a minimum flow bit rate), a packet error rate (Packet Error Rate, PER), a packet loss rate, a transmission delay budget, or a buffer delay budget.

That the QoS cannot be met includes at least one of the following: the guaranteed flow bit rate cannot be guaranteed (for example, an actual transmission rate is lower than the guaranteed flow bit rate), the minimum transmission rate cannot be met (for example, an actual minimum transmission rate is lower than the minimum transmission rate), the packet error rate cannot be met (for example, an actual packet error rate is higher than the packet error rate in the QoS), the packet loss rate cannot be met (for example, an actual packet loss rate is higher than the packet error rate in the QoS), the transmission delay budget cannot be met (an actual transmission delay overhead is higher than the transmission delay budget), or the buffer delay budget cannot be met (an actual data buffer delay overhead is higher than the buffer delay budget).

In an optional embodiment of this application, the data packet includes a protocol data unit (Protocol Data Unit, PDU) or a packet data unit.

In an optional embodiment of this application, the described ECN represents the ECN and/or an ECN marking for L4S.

In an optional embodiment of this application, for a QoS flow having a congestion monitoring requirement, having the congestion monitoring requirement means that a congestion monitoring requirement corresponding to the QoS flow is received or obtained. If the congestion monitoring requirement corresponding to the QoS flow is not obtained, it may be considered that the QoS flow does not have the congestion monitoring requirement.

In an optional embodiment of the present invention, the channel includes at least one of the following: a session (session) (such as a PDU session or a session between the RAN and the CN), a QoS flow, a QoS subflow, an evolved packet system (Evolved Packet System, EPS) bearer, a Packet Data Protocol (Packet Data Protocol, PDP) context, a DRB, a signaling radio bearer (Signaling Radio Bearer, SRB), an Internet Protocol Security (Internet Protocol Security, IPsec) association, or a General Packet Radio Service (General Packet Radio Service, GPRS) Tunneling Protocol (GPRS Tunneling Protocol, GTP) tunnel (tunnel). The channel may be instantiated as any one of the foregoing types of channels.

In an embodiment of this application, the NG interface may also be referred to as an S1 interface or an N2 interface, and the naming is not limited.

The following describes an information processing method according to an embodiment of the present invention.

Referring to FIG. 2, an embodiment of the present invention provides an information processing method. The method is performed by a first communication device. The first communication device includes but is not limited to one of the following: a RAN network element or a terminal. The method includes:

Step 21: The first communication device performs a first operation, where the first operation includes at least one of the following:
an operation related to a first duration and/or a first timer;
an operation related to a second duration and/or a second timer;
performing a first action within a first time period, at a first time, and/or at a time after a first time;
performing a second action within a first time period, at a second time, and/or at a time after a second time;
performing a third action within a second time period, beyond a first time period, at a third time, and/or at a time after a third time;
performing a fourth action within a second time period, beyond a first time period, at a fourth time, and/or at a time after a fourth time;
if a first condition is met, performing a first action, where the first action includes reporting congestion information by using an uplink data packet of a first quality of service QoS flow, and that a first condition is met includes at least one of the following:
   a congestion reporting condition is met or congestion occurs;
   a transition from meeting a congestion reporting condition to not meeting a congestion reporting condition occurs, or a transition from not meeting a congestion reporting condition to meeting a congestion reporting condition occurs;
   a transition from congestion to no congestion occurs, or a transition from no congestion to congestion occurs;
   a terminal leaves the first communication device;
   a first object is released;
   a real uplink data packet of the first QoS flow exists at a first start time, at a first end time, within a first time interval, and/or within a first time period;
   within a first time period, at a first start time, at a time after a first start time, at a first end time, and/or at a time after a first end time; or
   within a first time period, at a first time, and/or at a time after a first time;
   if a second condition is met, performing a second action, where the second action includes at least one of the following: generating a first dummy data packet, or reporting congestion information by using a first dummy data packet, and that a second condition is met includes at least one of the following:
      a congestion reporting condition is met or congestion occurs;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first start time, at a first end time, within a first time interval, and/or within a first time period;
      a first timer stops, or a first timer expires;
      a terminal leaves the first communication device;
      a first object is released;
      within a first time period, at a first start time, at a time after a first start time, at a first end time, and/or at a time after a first end time; or
      within a first time period, at a second time, and/or at a time after a second time;
      if a third condition is met, performing a third action, where the third action includes one of the following: stopping reporting congestion information by using an uplink data packet of a first QoS flow, stopping generating a first dummy data packet, not reporting first status information by using an uplink data packet of a first QoS flow, or reporting first information by using an uplink data packet of a first QoS flow, where the first status information includes at least one of the following: a first bit, the congestion information, and/or the first information, and that a third condition is met includes at least one of the following:
         a congestion reporting condition is no longer met, congestion ends, a congestion reporting condition is not met, or there is no congestion;
         a transition from meeting a congestion reporting condition to not meeting a congestion reporting condition occurs, or a transition from not meeting a congestion reporting condition to meeting a congestion reporting condition occurs;
         a transition from congestion to no congestion occurs, or a transition from no congestion to congestion occurs;
         a real uplink data packet of the first QoS flow exists at a first end time, within a second time interval, beyond a first time period, and/or within a second time period;
         within a second time period, beyond a first time period, at a first end time, and/or after a first end time; or

   within a second time period, beyond a first time period, at a third time, and/or at a time after a third time; or
      if a fourth condition is met, performing a fourth action, where the fourth action includes at least one of the following: generating a second dummy data packet, not carrying first status information in a second dummy data packet, or reporting first information by using a second dummy data packet, where the first status information includes at least one of the following: a first bit, congestion information, and/or the first information, and that a fourth condition is met includes at least one of the following:
      a congestion reporting condition is no longer met, congestion ends, a congestion reporting condition is not met, or there is no congestion;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first end time, within a second time interval, beyond a first time period, and/or within a second time period;
      a second timer stops, or a second timer expires;
      a terminal leaves the first communication device;
      a first object is released;
      within a second time period, beyond a first time period, at a first end time, and/or after a first end time; or
      within a second time period, beyond a first time period, at a fourth time, and/or at a time after a fourth time;
      where
      the first dummy data packet is a dummy data packet in an uplink direction in the first QoS flow;
      the second dummy data packet is a dummy data packet in the uplink direction in the first QoS flow; and
      the first object includes at least one of the following: the first QoS flow, a first radio bearer, and first logical information;
      where
      the first time includes one of the following: the first start time, the first end time, a time when the terminal leaves the first communication device, a time when the first object is released, the time after the first start time, the time after the first end time, a time after the terminal leaves the first communication device, or a time after the first object is released;
      the time after the first time includes one of the following: the time after the first start time, the time after the first end time, the time after the terminal leaves the first communication device, or the time after the first object is released;
      the second time includes one of the following: the first start time, the first end time, an end time of the first time interval, a time when the first timer expires, a time when the first timer stops, the time when the terminal leaves the first communication device, the time when the first object is released, the time after the first start time, the time after the first end time, a time after the end of the first time interval, a time after the first timer expires, a time after the first timer stops, the time after the terminal leaves the first communication device, or the time after the first object is released;
      the time after the second time includes one of the following: the time after the first start time, the time after the first end time, the time after the end of the first time interval, the time after the first timer expires, the time after the first timer stops, the time after the terminal leaves the first communication device, or the time after the first object is released;
      the third time includes one of the following: the first end time, the time when the terminal leaves the first communication device, the time when the first object is released, the time after the first end time, the time after the terminal leaves the first communication device, the time after the first object is released, or a time beyond the first time period;
      the time after the third time includes one of the following: the time after the first end time, the time after the terminal leaves the first communication device, the time after the first object is released, or the time beyond the first time period;
      the fourth time includes one of the following: the first end time, an end time of the second time interval, a time when the second timer expires, a time when the second timer stops, the time when the terminal leaves the first communication device, the time when the first object is released, the time after the first end time, a time after the end of the second time interval, a time after the second timer expires, a time after the second timer stops, the time after the terminal leaves the first communication device, the time after the first object is released, or the time beyond the first time period; and
      the time after the fourth time includes one of the following: the time after the first end time, the time after the end of the second time interval, the time after the second timer expires, the time after the second timer stops, the time after the terminal leaves the first communication device, the time after the first object is released, or the time beyond the first time period;
      where
      the first time period is one of the following: a time period between the first start time and the first end time, or a time period when the congestion occurs;
      the first start time is one of the following: a time when the congestion reporting condition is met or the congestion occurs, or a time after the congestion reporting condition is met or the congestion occurs; and
      the first end time is one of the following: a time when a last uplink data packet carrying congestion information is sent, a time when the congestion reporting condition is no longer met or the congestion ends, a time when the congestion reporting condition is not met or there is no congestion, the time when the terminal leaves the first communication device, the time when the first object is released, the time when the first timer stops, the time when the second timer stops, a time after the last uplink data packet carrying the congestion information is sent, a time after the congestion reporting condition is no longer met or the congestion ends, a time after the congestion reporting condition is not met or there is no congestion, the time after the terminal leaves the first communication device, the time after the first object is released, the time after the first timer stops, or the time after the second timer stops;
      where
      the second time period is one of the following: a time period between the second start time and the second end time, or a time period when the congestion ends or there is no congestion;
      the second start time is one of the following: the time when the last uplink data packet carrying the congestion information is sent, the time when the congestion reporting condition is no longer met or the congestion ends, the time when the congestion reporting condition is not met or there is no congestion, the time after the last uplink data packet carrying the congestion information is sent, the time after the congestion reporting condition is no longer met or the congestion ends, or the time after the congestion reporting condition is not met or there is no congestion; and
      the second end time is one of the following: the time when the congestion reporting condition is met or the congestion occurs, the time after the congestion reporting condition is met or the congestion occurs, the time when the terminal leaves the first communication device, the time when the first object is released, the time when the second timer stops, the time after the terminal leaves the first communication device, the time after the first object is released, or the time after the second timer stops;
      where
      the first time interval is a time interval based on the first start time; and
      the second time interval is a time interval based on the first end time.

In an implementation, the first communication device includes but is not limited to a RAN network element or a terminal.

In an implementation, in a case that the terminal leaves or accesses the first communication device, the first communication device does not include the terminal.

In an implementation, the first duration and the second duration may be the same or different. The first duration may be a first periodicity and the second duration may be a second periodicity. The first timer and the second timer may be the same or different.

In an implementation, the first status information may be represented by the first bit. Therefore, "stopping reporting the first status information by using the uplink data packet of the first QoS flow" may be represented by one of the following: the uplink data packet of the first QoS flow does not include the first bit; or a value of the first bit of the uplink data packet of the first QoS flow does not include a value used to represent the congestion information and/or the first information.

In an implementation, the first bit may be a bit used to describe uplink and/or downlink congestion status information (such as uplink congestion information and/or first information, downlink congestion information and/or first information, or uplink and downlink congestion information and/or first information). The first bit may be one or more bits, and the value includes a value used to represent the congestion information and/or the first information.

The value of the first bit may include one of the following:
a first value, where the first value is a value used to indicate the uplink congestion information (for example, uplink congestion occurs);
a second value, where the second value is a value used to indicate the uplink first information (for example, there is no uplink congestion);
a third value, where the third value is a value used to indicate the downlink congestion information (for example, downlink congestion occurs);
a fourth value, where the fourth value is a value used to indicate the downlink first information (for example, there is no downlink congestion);
a fifth value, where the fifth value is a value used to indicate the congestion information (for example, congestion occurs, or both uplink congestion and downlink congestion occur); or
a sixth value, where the sixth value is a value used to indicate the first information (for example, there is no congestion, or there is neither uplink congestion nor downlink congestion).

It is not difficult to understand that the first information (end of the congestion or no congestion) may be implicitly indicated without carrying the congestion information or the first status information.

In an implementation, a time interval between a time after a target time and the target time may be a processing duration.

The processing duration is long enough to perform the first action, the second action, the third action, or the fourth action, for example, long enough to allow the uplink data packet of the first QoS flow to carry the congestion information or the first information, and long enough to construct a dummy data packet so that the dummy data packet carries the congestion information or the first information.

The target time includes but is not limited to one of the following: the first start time, the first end time, the end time of the first time interval, the time when the first timer expires, the time when the first timer stops, the time when the terminal leaves the first communication device, the time when the first object is released, the end time of the second time interval, the time when the second timer expires, the time when the second timer stops, the time when the congestion reporting condition is met or the congestion occurs, or the time when the congestion reporting condition is not met or the congestion ends.

The processing duration may be preconfigured on the first communication device.

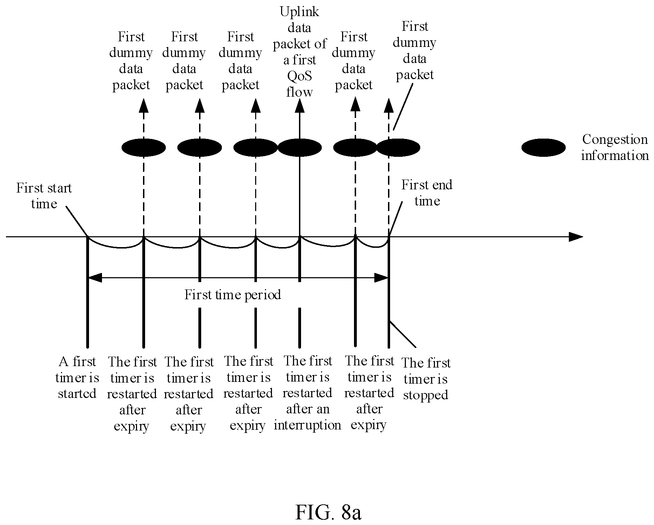

In another implementation, the time after the target time is any time of a time period after the target time. For example, a dummy data packet may be generated many times within the time after the target time (as shown in FIG. 8a to FIG. 8c).

In an implementation, that the first time interval is a time interval based on the first start time may be understood as: the first start time is used as a starting point of the first time interval. A duration of the first time interval may be preconfigured on the first communication device or received from a core network element.

In an implementation, that the second time interval is a time interval based on the first end time may be understood as: the first end time is used as a starting point of the second time interval. A duration of the second time interval may be preconfigured on the first communication device or received from the core network element.

In an implementation,
in a case that no uplink data packet of the first QoS flow exists at the first start time, the second action is performed at the first start time;
in a case that no uplink data packet of the first QoS flow exists at the first end time, the second action is performed at the first end time;
in a case that no uplink data packet of the first QoS flow exists within the first time interval, the second action is performed at the end time of the first time interval;
in a case that no uplink data packet of the first QoS flow exists within the first time period, the second action is performed at the first end time; or
in a case that no uplink data packet of the first QoS flow exists before the first timer expires, the second action is performed when the first timer expires.

In an implementation,
that no uplink data packet of the first QoS flow exists within the first time interval includes at least one of the following:
no real uplink data packet of the first QoS flow exists at the start time of the first time interval; or
no real uplink data packet of the first QoS flow exists near the start time of the first time interval.

Reporting congestion information by using all uplink data packets of the first QoS flow means that all the uplink data packets of the first QoS flow carry the congestion information.

In an implementation, generating the first dummy data packet in a case that no uplink data packet of the first QoS flow exists includes: generating the first dummy data packet immediately in the case that no uplink data packet of the first QoS flow exists.

In an implementation, reporting the congestion information by using the first dummy data packet includes: allowing the first dummy data packet to carry the congestion information.

In an implementation, reporting the congestion information by using the uplink data packet of the first QoS flow includes: continuously reporting the congestion information by using all uplink data packets of the first QoS flow.

In an implementation, reporting the congestion information by using the uplink data packet of the first QoS flow includes: allowing each of all uplink data packets of the first QoS flow to carry the congestion information within the first time period.

In an implementation, reporting the congestion information by using the uplink data packet of the first QoS flow includes: allowing packet headers of all uplink data packets of the first QoS flow to carry the congestion information.

In an embodiment, reporting the congestion information by using the first dummy data packet includes: allowing a packet header of the first dummy data packet to carry the congestion information.

In an implementation, that the congestion ends means that the congestion no longer exists.

Optionally,
the performing a first action within a first time period, at a first time, and/or at a time after a first time includes:
if the first condition is met, performing the first action within the first time period, at the first time, and/or at the time after the first time;
   and/or
the performing a second action within a first time period, at a second time, and/or at a time after a second time includes:
   if the second condition is met, performing the second action within the first time period, at the second time, and/or at the time after the second time;
   and/or
the performing a third action within a second time period, beyond a first time period, at a third time, and/or at a time after a third time includes:
if the third condition is met, performing the third action within the second time period, beyond the first time period, at the third time, and/or at the time after the third time;
   and/or
the performing a fourth action within a second time period, beyond a first time period, at a fourth time, and/or at a time after a fourth time includes:
   if the fourth condition is met, performing the fourth action within the second time period, beyond the first time period, at the fourth time, and/or at the time after the fourth time.

Optionally,
the reporting congestion information includes: reporting uplink congestion information; and/or
that a congestion reporting condition is met includes: an uplink congestion reporting condition is met; and/or
that congestion occurs includes: uplink congestion occurs; and/or
that congestion ends includes: uplink congestion ends; and/or
that a congestion reporting condition is no longer met includes: an uplink congestion reporting condition is no longer met; and/or
that a congestion reporting condition is not met includes: an uplink congestion reporting condition is not met; and/or
that there is no congestion includes: there is no uplink congestion; and/or
that the congestion information is not carried includes: uplink congestion information is not carried; and/or
the first information includes first uplink information; and/or
the first status information includes uplink first status information.

In an implementation, that an uplink congestion reporting condition is met includes at least one of the following:
an uplink congestion reporting event occurs, an uplink congestion level reaches a reporting level, the uplink congestion occurs, a transition from the uplink congestion to no uplink congestion occurs, a transition from no uplink congestion to the uplink congestion occurs, the terminal accesses the first communication device or the terminal leaves the first communication device, or the first object is established in the first communication device or the first object is released in the first communication device.

In an implementation, that an uplink congestion reporting condition is not met includes at least one of the following: the uplink congestion reporting event disappears or does not occur, there is no uplink congestion or the uplink congestion ends, the uplink congestion level does not reach the reporting level, the transition from the uplink congestion to no uplink congestion occurs, the transition from no uplink congestion to the uplink congestion occurs, the terminal leaves the first communication device, or the first object is released in the first communication device.

The transition from the uplink congestion to no uplink congestion is a critical point between the congestion and no congestion, which can represent both a last time of the congestion and a start time of no congestion.

The transition from no uplink congestion to the uplink congestion is a critical point between no congestion and the congestion, which can represent both a last time of no congestion and a start time of the congestion.

In an implementation, in a case that meeting the uplink congestion reporting condition includes the transition from the uplink congestion to no uplink congestion, not meeting the uplink congestion reporting condition does not include the transition from the uplink congestion to no uplink congestion, and vice versa.

In an implementation, in a case that meeting the uplink congestion reporting condition includes the transition from no uplink congestion to the uplink congestion, not meeting the uplink congestion reporting condition does not include the transition from no uplink congestion to the uplink congestion, and vice versa.

In an implementation, in a case that meeting the uplink congestion reporting condition includes that the terminal leaves the first communication device, not meeting the uplink congestion reporting condition does not include that the terminal leaves the first communication device, and vice versa.

In an implementation, in a case that meeting the uplink congestion reporting condition includes that the first object is released in the first communication device, not meeting the uplink congestion reporting condition does not include that the first object is released in the first communication device, and vice versa.

Optionally,
the reporting congestion information includes: reporting downlink congestion information; and/or
that a congestion reporting condition is met includes: a downlink congestion reporting condition is met; and/or
that congestion occurs includes: downlink congestion occurs; and/or
that congestion ends includes: downlink congestion ends; and/or
that a congestion reporting condition is no longer met includes: a downlink congestion reporting condition is no longer met; and/or
that a congestion reporting condition is not met includes: a downlink congestion reporting condition is not met; and/or
that there is no congestion includes: there is no downlink congestion; and/or
that the congestion information is not carried includes: downlink congestion information is not carried; and/or
the first information includes first downlink information; and/or
the first status information includes downlink first status information.

In an implementation, reporting the congestion information by using the uplink data packet of the first QoS flow includes: reporting the downlink congestion information by using the uplink data packet of the first QoS flow; or reporting the uplink congestion information by using the uplink data packet of the first QoS flow.

In an implementation, reporting the downlink congestion information by using the uplink data packet of the first QoS flow includes at least one of the following:
in a case that the uplink data packet of the first QoS flow exists, reporting the downlink congestion information by using the uplink data packet of the first QoS flow; or
in a case that no uplink data packet of the first QoS flow exists, generating the first dummy data packet, and reporting the downlink congestion information by using the first dummy data packet.

In an implementation, that a downlink congestion reporting condition is met includes at least one of the following: a downlink congestion reporting event occurs, a downlink congestion level reaches a reporting level, the downlink congestion occurs, a transition from the downlink congestion to no downlink congestion occurs, a transition from no downlink congestion to the downlink congestion occurs, the terminal accesses the first communication device or the terminal leaves the first communication device, or the first object is established in the first communication device or the first object is released in the first communication.

In an implementation, that a downlink congestion reporting condition is not met includes at least one of the following: the downlink congestion reporting event disappears or does not occur, there is no downlink congestion or the downlink congestion ends, the downlink congestion level does not reach the reporting level, the transition from the downlink congestion to no downlink congestion occurs, the transition from no downlink congestion to the downlink congestion occurs, the terminal leaves the first communication device, or the first object is released in the first communication device.

The transition from the downlink congestion to no downlink congestion is a critical point between the congestion and no congestion, which can represent both a last time of the congestion and a start time of no congestion.

The transition from no downlink congestion to the downlink congestion is a critical point between no congestion and the congestion, which can represent both a last time of no congestion and a start time of the congestion.

In an implementation, in a case that meeting the downlink congestion reporting condition includes the transition from the downlink congestion to no downlink congestion, not meeting the downlink congestion reporting condition does not include the transition from the downlink congestion to no downlink congestion, and vice versa.

In an implementation, in a case that meeting the downlink congestion reporting condition includes the transition from no downlink congestion to the downlink congestion, not meeting the downlink congestion reporting condition does not include the transition from no downlink congestion to the downlink congestion, and vice versa.

In an implementation, in a case that meeting the downlink congestion reporting condition includes that the terminal leaves the first communication device, not meeting the downlink congestion reporting condition does not include that the terminal leaves the first communication device, and vice versa.

In an implementation, in a case that meeting the downlink congestion reporting condition includes that the first object is released in the first communication device, not meeting the downlink congestion reporting condition does not include that the first object is released in the first communication device, and vice versa.

Optionally, the operation related to the first duration and/or the first timer includes at least one of the following:
obtaining the first duration;
determining a duration of the first timer based on the first duration;
periodically generating the first dummy data packet by using the first duration as a periodicity;
generating the first dummy data packet based on the first timer;
within the first time period, at the first start time, at the first end time, at the end time of the first time interval, at the time when the first timer expires, at a time when the first dummy data packet is generated, at a time when the first dummy data packet is sent, at a time when the uplink data packet of the first QoS flow is received, at a time when the uplink data packet of the first QoS flow is sent, at the time after the first start time, at the time after the first end time, at a time after the end time of the first time interval, at the time after the first timer expires, at a time after the first dummy data packet is sent, at a time after the first dummy data packet is generated, at a time after the uplink data packet of the first QoS flow is sent, and/or at a time after the uplink data packet of the first QoS flow is received, starting or restarting the first timer;
beyond the first time period, within the second time period, at the first end time, at the time when the first timer expires, at the time after the first end time, and/or at the time after the first timer expires, stopping the first timer;
if a fifth condition is met, starting or restarting the first timer, where that a fifth condition is met includes at least one of the following:
   the congestion reporting condition is met or the congestion occurs
   the first timer expires;
   the uplink data packet of the first QoS flow is received, the uplink data packet of the first QoS flow is sent, or the first dummy data packet is sent; or

no uplink data packet of the first QoS flow exists at the first start time, at the first end time, within the first time interval, and/or within the first time period; or
   if a sixth condition is met, stopping the first timer, where that a sixth condition is met includes at least one of the following:
   the uplink data packet of the first QoS flow is received before the first timer expires;
   the first timer expires;
the congestion reporting condition is no longer met, the congestion ends, the congestion reporting condition is not met, or there is no congestion;
   the terminal leaves the first communication device; or
   the first object is released.

In an implementation, the first duration is the duration of the first timer.

The periodically generating the first dummy data packet by using the first duration as a periodicity includes: periodically generating the first dummy data packet within the first time period by using the first start time as a starting point.

Restarting the first timer means that the first timer returns to an initial timing state, for example, returns from counting up to a zero state, or returns from counting down to a state with a long timer duration.

In an implementation, the generating the first dummy data packet includes at least one of the following: periodically generating the first dummy data packet by using the first duration as a periodicity; or generating the first dummy data packet based on the first timer.

The periodically generating the first dummy data packet by using the first duration as a periodicity includes: in a case that a quantity of first dummy data packets is greater than and/or equal to 2, a time interval between two consecutive first dummy data packets is the first duration or a duration of the first timer.

The generating the first dummy data packet based on the first timer includes at least one of the following:
in a case that the first timer expires, generating the first dummy data packet.

In a case that a quantity of first dummy data packets is greater than and/or equal to 2, a time interval between two consecutive first dummy data packets is the first duration or a duration of the first timer.

Optionally, the operation related to the second duration and/or the second timer includes at least one of the following:
obtaining the second duration;
determining a duration of the second timer based on the second duration;
periodically generating the second dummy data packet by using the second duration as a periodicity;
generating the second dummy data packet based on the second timer;
beyond the first time period, within the second time period, at the first end time, at the end time of the second time interval, at the time when the second timer expires, at a time when the second dummy data packet is generated, at a time when the second dummy data packet is sent, at a time when the uplink data packet of the first QoS flow is received, at a time when the uplink data packet of the first QoS flow is sent, at the time after the first end time, at a time after the end time of the second time interval, at the time after the second timer expires, at a time after the second dummy data packet is sent, at a time after the second dummy data packet is generated, at a time after the uplink data packet of the first QoS flow is sent, and/or at a time after the uplink data packet of the first QoS flow is received, starting or restarting the second timer;
beyond the second time period, within the first time period, at the time when the second timer expires, at the first start time, at the time after the second timer expires, and/or at the time after the first start time, stopping the second timer;
in a case that a seventh condition is met, starting or restarting the second timer, where the seventh condition includes at least one of the following:

the congestion reporting condition is no longer met, the congestion ends, the congestion reporting condition is not met, or there is no congestion;
   the second timer expires;
   the uplink data packet of the first QoS flow is received;
   the uplink data packet of the first QoS flow is sent, or the second dummy data packet is sent;
   no uplink data packet of the first QoS flow exists at the first end time, within the second time interval, beyond the first time period, and/or within the second time period;
   the terminal accesses the first communication device; or
   the first object is established; or
   in a case that an eighth condition is met, stopping the second timer, where the eighth condition includes at least one of the following:
      the uplink data packet of the first QoS flow is received before the second timer expires;
      the second timer expires;
      the congestion reporting condition is met or the congestion occurs
      the first time period is entered;
      the terminal leaves the first communication device; or
      the first object is released.

In an implementation, the periodically generating the second dummy data packet by using the second duration as a periodicity includes: periodically generating the second dummy data packet beyond the first time period by using the second duration as a periodicity and the first end time as a starting point.

The generating the second dummy data packet based on the second timer includes: when the second timer expires, generating the second dummy data packet.

In an implementation, when the second timer expires, the second timer is stopped. In this case, a maximum of one dummy data packet is generated. In another implementation, the second timer is restarted. In this case, the second dummy data packet is generated continuously.

In an implementation, the generating the second dummy data packet includes at least one of the following: periodically generating the second dummy data packet by using the second duration as a periodicity; or generating the second dummy data packet based on the second timer.

The periodically generating the second dummy data packet by using the second duration as a periodicity includes: in a case that a quantity of second dummy data packets is greater than and/or equal to 2, a time interval between two consecutive second dummy data packets is the second duration or a duration of the second timer.

The generating the second dummy data packet based on the second timer includes at least one of the following:
in a case that the second timer expires, generating the second dummy data packet.

In a case that a quantity of second dummy data packets is greater than and/or equal to 2, a time interval between two consecutive second dummy data packets is the second duration or a duration of the second timer.

Optionally,
the first dummy data packet includes one or more dummy data packets;
   and/or
in a case that a quantity of first dummy data packets is greater than and/or equal to 2, a time interval between two consecutive first dummy data packets is the first duration or a duration of the first timer; and
the second dummy data packet includes one or more dummy data packets;
   and/or
in a case that a quantity of second dummy data packets is greater than and/or equal to 2, a time interval between two consecutive second dummy data packets is the second duration or a duration of the second timer.

Optionally, the reporting congestion information by using an uplink data packet of a first quality of service QoS flow includes at least one of the following:
allowing each uplink data packet of the first QoS flow to carry the congestion information; or
continuously reporting the congestion information by using a plurality of uplink data packets of the first QoS flow;
   and/or
the reporting first information by using an uplink data packet of a first QoS flow includes at least one of the following:
   allowing each uplink data packet of the first QoS flow to carry the first information; or
   continuously reporting the first information by using a plurality of uplink data packets of the first QoS flow.

In an implementation, the plurality of uplink data packets are greater than and/or equal to two data packets.

Optionally, the congestion information includes at least one of the following:
information used to indicate start of the congestion or occurrence of the congestion;
information used to indicate a congestion level;
information used to indicate a congestion direction;
   information used to indicate start of the uplink congestion or occurrence of the uplink congestion; or
   information used to indicate start of the downlink congestion or occurrence of the downlink congestion;
   and/or
the uplink congestion information includes at least one of the following:
   information used to indicate an uplink congestion level; or
      information used to indicate start of the uplink congestion or occurrence of the uplink congestion;
      and/or
   the downlink congestion information includes at least one of the following:
      information used to indicate a downlink congestion level; or
         information used to indicate start of the downlink congestion or occurrence of the downlink congestion;
         and/or
      the first status information includes at least one of the following: the first bit, the congestion information, and/or the first information;
         and/or
      the uplink first status information includes at least one of the following: a first value of the first bit, a second value of the first bit, the uplink congestion information, and/or uplink first information;
         and/or
      the downlink first status information includes at least one of the following: a third value of the first bit, a fourth value of the first bit, the downlink congestion information, and/or downlink first information;
      where
      the first value is a value used to indicate the uplink congestion information;
      the second value is a value used to indicate the uplink first information;
      the third value is a value used to indicate the downlink congestion information; and
      the fourth value is a value used to indicate the downlink first information.

In an implementation, when the congestion information includes an explicit indication of the congestion direction, the congestion information is congestion information indicating a specific direction. For example, when the congestion information includes information used to indicate the start of the congestion or the occurrence of the congestion and information used to indicate the congestion direction, the congestion information is downlink congestion information when the information used to indicate the congestion direction indicates downlink. For example, when the congestion information includes information used to indicate the start of the downlink congestion or the occurrence of the downlink congestion, the congestion information is downlink congestion information. For example, when the congestion information includes information used to indicate the start of the downlink congestion or the occurrence of the downlink congestion and information used to indicate the start of the uplink congestion or the occurrence of the uplink congestion, the congestion information is uplink and downlink congestion information.

Optionally, the first information includes at least one of the following:
information used to indicate the end of the congestion or no congestion;
information used to indicate a direction of the end of the congestion or no congestion;
information used to indicate the end of the uplink congestion or no uplink congestion; or
information used to indicate the end of the downlink congestion or no downlink congestion;
   and/or

the first uplink information includes information used to indicate the end of the downlink congestion or no downlink congestion;
   and/or
the first downlink information includes information used to indicate the end of the downlink congestion or no downlink congestion.

Optionally, that a congestion reporting condition is met includes at least one of the following:
a congestion reporting event occurs, a congestion level reaches a reporting level, the congestion occurs, the transition from the congestion to no congestion occurs, the transition from no congestion to the congestion occurs, the terminal accesses the first communication device or the terminal leaves the first communication device, or the first object is established in the first communication device or the first object is released in the first communication device.

In an implementation, the transition from the congestion to no congestion is a critical point between the congestion and no congestion, which can represent both a last time of the congestion and a start time of no congestion.

The transition from no congestion to the congestion is a critical point between no congestion and the congestion, which can represent both a last time of no congestion and a start time of the congestion.

In an implementation, in a case that meeting the congestion reporting condition includes the transition from the congestion to no congestion, not meeting the congestion reporting condition does not include the transition from the congestion to no congestion, and vice versa.

In an implementation, in a case that meeting the congestion reporting condition includes the transition from no congestion to the congestion, not meeting the congestion reporting condition does not include the transition from no congestion to the congestion.

In an implementation, in a case that meeting the congestion reporting condition includes that the terminal leaves the first communication device, not meeting the congestion reporting condition does not include that the terminal leaves the first communication device, and vice versa.

In an implementation, in a case that meeting the congestion reporting condition includes that the first object is released in the first communication device, not meeting the congestion reporting condition does not include that the first object is released in the first communication device, and vice versa.

In an implementation, that the terminal accesses the first communication device includes: the terminal moves to the first communication device, the terminal is handed over to the first communication device, a connection is established between the terminal and the first communication device, or a context of the terminal is successfully established in the first communication device.

The congestion reporting event includes one of the following: the congestion occurs, or the first object is congested, the terminal accesses the first communication device, the terminal leaves the first communication device, the first object is established, or the first object is released.

Optionally, that a congestion reporting condition is no longer met or that a congestion reporting condition is not met includes at least one of the following:
a congestion reporting event is cleared or does not occur, the congestion ends or there is no congestion, a congestion level drops below a reporting level or does not reach a reporting level, the transition from the congestion to no congestion occurs, the transition from no congestion to the congestion occurs, the terminal leaves the first communication device, or the first object is released in the first communication device, where
the first object includes at least one of the following: the first QoS flow, the first radio bearer, a first logical channel, or the terminal.

In an implementation, that the terminal leaves the first communication device includes: the terminal moves out of the first communication device, the terminal is handed over from the first communication device, the connection between the terminal and the first communication device is released, or the context of the terminal is deleted from the first communication device.

The end of the congestion is the end of the congestion of the first object.

The end of the congestion or no congestion includes a time period of the end of the congestion or no congestion.

In an embodiment, when the first communication device is a terminal, when the terminal determines that the terminal leaves a current accessed access network device or the terminal determines that the terminal moves out of a current accessed access network device (the access network device may be considered as a source access network device), it is determined that the congestion reporting condition is not met; or when the first communication device is a RAN, if the RAN knows that the terminal moves out or leaves, it is determined that the congestion reporting condition is not met.

Optionally, the congestion information, the first information, and/or the first status information is different from an explicit congestion notification ECN marking or an ECN marking for L4S.

When the first communication device is a RAN network element, if the first communication device receives the uplink data packet of the first QoS flow, the uplink data packet of the first QoS flow is sent to the RAN network element by the terminal.

According to this embodiment of the present invention, in one manner, when the QoS flow of the terminal is congested in the RAN, in the congestion process, the RAN continuously reports the congestion information in each uplink packet of the QoS flow to implement an explicit congestion indication, and after the congestion ends, stops sending any congestion marking to implicitly indicate that the congestion ends. In this way, the congestion status can be updated in real time, so that a core network element, a server, or a client can know the congestion status in a timely manner even if the RAN network element has changed, thereby ensuring a throughput of the service data flow. In another manner, within a time period of no congestion, the RAN continuously reports information of no congestion in each uplink packet of the QoS flow to implement an explicit indication of no congestion. In addition, this embodiment of the present invention clearly defines how to report information at the critical point of the transition from meeting the congestion reporting condition to not meeting the congestion reporting condition, thereby ensuring an accurate indication of the congestion status.

Referring to FIG. 3, an embodiment of the present invention provides an information processing method. The method is applied to a second communication device. The second communication device includes but is not limited to a core network element (such as a user plane function (User Plane Function, UPF)). The method includes:

Step 31: The second communication device performs a second operation, where the second operation includes at least one of the following:
modifying a congestion marking in an uplink data packet to a value used to indicate occurrence of congestion;
stopping modifying a congestion marking in an uplink data packet to a value used to indicate occurrence of congestion;
modifying a congestion marking in a downlink data packet to a value used to indicate occurrence of congestion;
stopping modifying a congestion marking in a downlink data packet to a value used to indicate occurrence of congestion;
performing a fifth action, where the fifth action includes at least one of the following:
   sending second information;
   saving or updating congestion information;
   modifying a status of a first object to a congested state;
   modifying a congestion marking in a data packet to a value used to indicate occurrence of congestion; or
   discarding an uplink dummy data packet, where the uplink dummy data packet includes a first dummy data packet and/or a second dummy data packet; or
   performing a sixth action, where the sixth action includes at least one of the following:
      sending third information;
      deleting congestion information;
      modifying a status of a first object to an uncongested state;
      stopping modifying a congestion marking in a data packet to a value used to indicate occurrence of congestion; or
      discarding an uplink dummy data packet, where the uplink dummy data packet includes a first dummy data packet and/or a second dummy data packet;
      where
      the second information includes at least one of the following:
         information used to indicate start of the congestion or occurrence of the congestion;
         information used to indicate a congestion level;
         information used to indicate a congestion direction;
         information used to indicate start of uplink congestion or occurrence of uplink congestion; or
         information used to indicate start of downlink congestion or occurrence of downlink congestion; and
         the third information includes at least one of the following:
            information used to indicate end of the congestion or no congestion;
            information used to indicate the congestion direction;
            information used to indicate end of the uplink congestion or no uplink congestion; or
            information used to indicate end of the downlink congestion or no downlink congestion.

In an implementation,
uplink congestion information includes at least one of the following:
information used to indicate an uplink congestion level; or
information used to indicate the start of the uplink congestion or the occurrence of the uplink congestion.

In an implementation,
downlink congestion information includes at least one of the following:
information used to indicate a downlink congestion level; or
information used to indicate the start of the downlink congestion or the occurrence of the downlink congestion.

In an implementation, the uplink data packet refers to an uplink data packet to be sent; and the downlink data packet refers to a downlink data packet to be sent.

In an implementation, the sending second information includes at least one of the following: sending the second information to a target end by using a signaling plane. The target end includes but is not limited to at least one of the following: an SMF, a PCF, a NEF, or an AF.

In an implementation, the sending third information includes at least one of the following: sending the third information to a target end by using a signaling plane. The target end includes but is not limited to at least one of the following: an SMF, a PCF, a NEF, or an AF.

In an implementation, modifying a congestion marking in a downlink data packet to a value used to indicate occurrence of downlink congestion means continuously modifying a congestion marking in a downlink data packet (for example, each downlink data packet) to the value used to indicate the occurrence of the downlink congestion, that is, in a case that a fifth condition is met and/or as long as a downlink data packet is received within a second time period, the congestion marking in each received downlink data packet is modified to the value used to indicate the occurrence of the downlink congestion.

Optionally,
the saving or updating congestion information includes: saving or updating downlink congestion information, saving or updating downlink congestion information within a first time period, or saving or updating downlink congestion information based on received downlink congestion information; and/or
the modifying a status of a first object to a congested state includes: modifying the status of the first object in a downlink direction to a downlink congested state, or modifying the status of the first object to a downlink congested state within a first time period; and/or
the modifying a congestion marking in a data packet to a value used to indicate occurrence of congestion includes: modifying the congestion marking in the downlink data packet to the value used to indicate occurrence of the congestion, or within a first time period or in a case that the status of the first object is a downlink congested state, modifying a congestion marking in a downlink data packet of the first object to the value used to indicate occurrence of the congestion; and/or
the deleting congestion information includes: deleting downlink congestion information; and/or
the modifying a status of a first object to an uncongested state includes: modifying the status of the first object to a downlink uncongested state; and/or
the stopping modifying a congestion marking in a data packet to a value used to indicate occurrence of congestion includes: stopping modifying the congestion marking in the downlink data packet to the value used to indicate occurrence of the congestion.

Optionally,
the saving or updating congestion information includes: saving or updating uplink congestion information, saving or updating uplink congestion information within a first time period, or saving or updating uplink congestion information based on received uplink congestion information; and/or
the modifying a status of a first object to a congested state includes: modifying the status of the first object to an uplink congested state, or modifying the status of the first object to an uplink congested state within a first time period; and/or
the modifying a congestion marking in a data packet to a value used to indicate occurrence of congestion includes: modifying the congestion marking in the uplink data packet to the value used to indicate occurrence of the congestion, or within a first time period or in a case that the status of the first object is an uplink congested state, modifying a congestion marking in an uplink data packet of the first object to the value used to indicate occurrence of the congestion; and/or
the deleting congestion information includes: deleting uplink congestion information; and/or
the modifying a status of a first object to an uncongested state includes: modifying the status of the first object to an uplink uncongested state; and/or
the stopping modifying a congestion marking in a data packet to a value used to indicate occurrence of congestion includes: stopping modifying the congestion marking in the uplink data packet to the value used to indicate occurrence of the congestion.

Optionally, the modifying a congestion marking in an uplink data packet to a value used to indicate occurrence of congestion includes: in a case that a ninth condition is met, modifying the congestion marking in the uplink data packet to the value used to indicate occurrence of the congestion, where
the ninth condition includes at least one of the following:
the received uplink data packet carries uplink congestion information; or
uplink congestion information is received from control plane signaling.

In an implementation, that an uplink data packet carries congestion information includes that a value of a first bit in the uplink data packet is a first value, where the first value is a value used to indicate the uplink congestion information (for example, the uplink congestion occurs).

The first bit may be one or more bits, and the value includes a value used to represent the congestion information and/or the first information.

The uplink data packet is a data packet of a first QoS flow.

The control plane signaling is signaling related to the first QoS flow.

Optionally, the stopping modifying a congestion marking in an uplink data packet to a value used to indicate occurrence of congestion includes:
in a case that a tenth condition is met, stopping modifying the congestion marking in the uplink data packet to the value used to indicate occurrence of the congestion, where
the tenth condition includes at least one of the following:
   the received uplink data packet carries uplink first information;
   the received uplink data packet does not carry uplink congestion information and/or does not carry uplink first information;
   the received uplink data packet does not carry uplink first status information; or
   uplink first information is received from control plane signaling.

In an implementation, that an uplink data packet carries first information includes that the value of the first bit in the uplink data packet is a second value, where the second value is a value used to indicate the uplink first information (for example, there is no uplink congestion).

In an implementation, an uplink data packet not carrying the first information and not carrying the congestion information is used to indicate no congestion.

In an implementation, an uplink data packet not carrying the first bit is used to indicate no congestion.

In an implementation, an uplink data packet not carrying the uplink first information and not carrying the uplink congestion information is used to indicate no uplink congestion.

In an implementation, not carrying the uplink first status information includes one of the following: not carrying the first value of the first bit and the second value of the first bit, or not carrying the uplink congestion information and the uplink first information.

In an implementation, an uplink data packet not carrying the uplink congestion information, not carrying the uplink first status information, not carrying the congestion information, or not carrying the first status information may be used to implicitly indicate no uplink congestion.

Optionally, the modifying a congestion marking in a downlink data packet to a value used to indicate occurrence of congestion includes:
in a case that an eleventh condition is met, modifying the congestion marking in the downlink data packet to the value used to indicate occurrence of the congestion, where
the eleventh condition includes at least one of the following:
   the received uplink data packet carries downlink congestion information; or
   downlink congestion information is received from control plane signaling.

In an implementation, the value of the first bit in the received uplink data packet is a third value, where the third value is a value used to indicate the downlink congestion information (for example, the downlink congestion occurs).

Optionally, the stopping modifying a congestion marking in a downlink data packet to a value used to indicate occurrence of congestion includes:
in a case that a twelfth condition is met, stopping modifying the congestion marking in the downlink data packet to the value used to indicate occurrence of the congestion, where
the twelfth condition includes at least one of the following:
   the received uplink data packet carries downlink first information;
   the received uplink data packet does not carry downlink congestion information;
   the received uplink data packet does not carry downlink first status information; or
   downlink first information is received from control plane signaling.

In an implementation, the value of the first bit in the received uplink data packet is a fourth value, where the fourth value is a value used to indicate the downlink first information (for example, there is no downlink congestion).

In an implementation, not carrying the downlink first status information includes one of the following: not carrying the third value of the first bit and the fourth value of the first bit, or not carrying the downlink congestion information and the downlink first information.

In an implementation, an uplink data packet not carrying the downlink congestion information, not carrying the downlink first status information, not carrying the congestion information, or not carrying the first status information may be used to implicitly indicate no downlink congestion.

Optionally,
the performing a fifth action includes: within a first time period and/or in a case that a thirteenth condition is met, performing the fifth action; and/or
the performing a sixth action includes: within a second time period and/or in a case that a fourteenth condition is met, performing the sixth action, where
the thirteenth condition includes at least one of the following:
   congestion information is received from control plane signaling;
   a first target data packet is received; or
   a received first target data packet is the first of one or more type-1 target data packets, where
   the type-1 target data packet includes an uplink data packet carrying congestion information; and
   the fourteenth condition includes at least one of the following:
      first information is received from control plane signaling;
      a second target data packet is received; or
      a received second target data packet is the first of a plurality of type-2 target data packets, where
      the type-2 target data packet meets one of the following:
         an uplink data packet that does not carry first status information;
         an uplink data packet that does not carry congestion information; or
         an uplink data packet that carries first information.

In an implementation, an uplink data packet not carrying the congestion information (such as uplink and downlink congestion information), or not carrying the first status information (such as uplink and downlink first status information) may be used to implicitly indicate no congestion (for example, there is neither uplink congestion nor downlink congestion).

In an implementation, the value of the first bit in the received uplink data packet is a fifth value, where the fifth value is a value used to indicate the congestion information (for example, the congestion occurs, or both the downlink congestion and the uplink congestion occur).

In an implementation, the value of the first bit in the received uplink data packet is a sixth value, where the sixth value is a value used to indicate the first information (for example, there is no congestion, or there is neither uplink congestion nor downlink congestion).

Optionally,
the congested state includes an uplink congested state; and/or
the congestion information includes uplink congestion information; and/or
the first information includes first uplink information.

Optionally,
the congested state includes a downlink congested state; and/or
the congestion information includes downlink congestion information; and/or
the first information includes first downlink information.

Optionally, the congestion information includes at least one of the following:
information used to indicate the start of the congestion or the occurrence of the congestion;
information used to indicate the congestion level;
information used to indicate the congestion direction;
information used to indicate the start of the uplink congestion or the occurrence of the uplink congestion; or
information used to indicate the start of the downlink congestion or the occurrence of the downlink congestion;
   and/or
the uplink congestion information includes at least one of the following:
   information used to indicate the uplink congestion level; or
   information used to indicate the start of the uplink congestion or the occurrence of the uplink congestion;
      and/or
   the downlink congestion information includes at least one of the following:
      information used to indicate the downlink congestion level; or
      information used to indicate the start of the downlink congestion or the occurrence of the downlink congestion;
         and/or
      the first status information includes at least one of the following: a first bit, the congestion information, and/or the first information;
         and/or
      uplink first status information includes at least one of the following: a first value of a first bit, a second value of a first bit, the uplink congestion information, and/or uplink first information;
         and/or
      the downlink first status information includes at least one of the following: a third value of a first bit, a fourth value of a first bit, the downlink congestion information, and/or downlink first information;
      where
      the first value is a value used to indicate the uplink congestion information;
      the second value is a value used to indicate the uplink first information;
      the third value is a value used to indicate the downlink congestion information; and
      the fourth value is a value used to indicate the downlink first information.

In an implementation, the congestion level includes at least one of the following: a first congestion level, where the first congestion level corresponds to a CE marking for L4S; or a second congestion level, where the second congestion level corresponds to a CE marking for an ECN.

Optionally, the first information includes at least one of the following:
information used to indicate the end of the congestion or no congestion;
information used to indicate a direction of the end of the congestion or no congestion;
information used to indicate the end of the uplink congestion or no uplink congestion; or
information used to indicate the end of the downlink congestion or no downlink congestion;
   and/or

the first uplink information includes information used to indicate the end of the downlink congestion or no downlink congestion;
   and/or
the first downlink information includes information used to indicate the end of the downlink congestion or no downlink congestion.

Optionally,
the first information and/or the first status information is different from an explicit congestion notification ECN marking or an ECN marking for L4S;
   and/or
the congestion marking includes an ECN marking or an ECN marking for L4S.

Optionally, the first time period is one of the following: a time period between a first start time and a first end time, or a time period when the congestion occurs;
the second time period is a time period when the congestion ends or there is no congestion;
the first start time is one of the following: a time when a congestion reporting condition is met or the congestion occurs, or a time after a congestion reporting condition is met or the congestion occurs; and
the first end time is one of the following: a time when a last uplink data packet carrying congestion information is sent, a time when the congestion reporting condition is no longer met or the congestion ends, a time when the congestion reporting condition is not met or there is no congestion, a time when a terminal leaves a first communication device, a time when the first object is released, a time when a first timer stops, a time when a second timer stops, a time after a last uplink data packet carrying congestion information is sent, a time after the congestion reporting condition is no longer met or the congestion ends, a time after the congestion reporting condition is not met or there is no congestion, a time after a terminal leaves a first communication device, a time after the first object is released, a time after a first timer stops, or a time after a second timer stops.

The uplink data packet received by the second communication device is sent by a RAN network element. Usually, the RAN network element sends the uplink data packet to an AMF, the AMF forwards the uplink data packet to the SMF, and then the SMF forwards the uplink data packet to the second communication device.

The downlink data packet received by the second communication device is sent to the second communication device by a server.

According to this embodiment of the present invention, when the QoS flow of the terminal is congested in a RAN, in the congestion process, the RAN continuously reports the congestion information in each uplink packet of the QoS flow to implement an explicit congestion indication, and after the congestion ends, stops sending any congestion marking to implicitly indicate that the congestion ends. In this way, the congestion status can be updated in real time, so that even if the RAN network element has changed, a CN can know the congestion status in a timely manner and expose the congestion status to the server or a client, so that the server or the client can know the congestion status in a timely manner, thereby ensuring a throughput of the service data flow. In addition, this embodiment of the present invention clearly defines how to report information at a critical point of a transition from meeting the congestion reporting condition to not meeting the congestion reporting condition, thereby ensuring an accurate indication of the congestion status.

The following describes sending states of uplink data packets in different cases in the embodiments of the present invention by using examples.

### Case 1

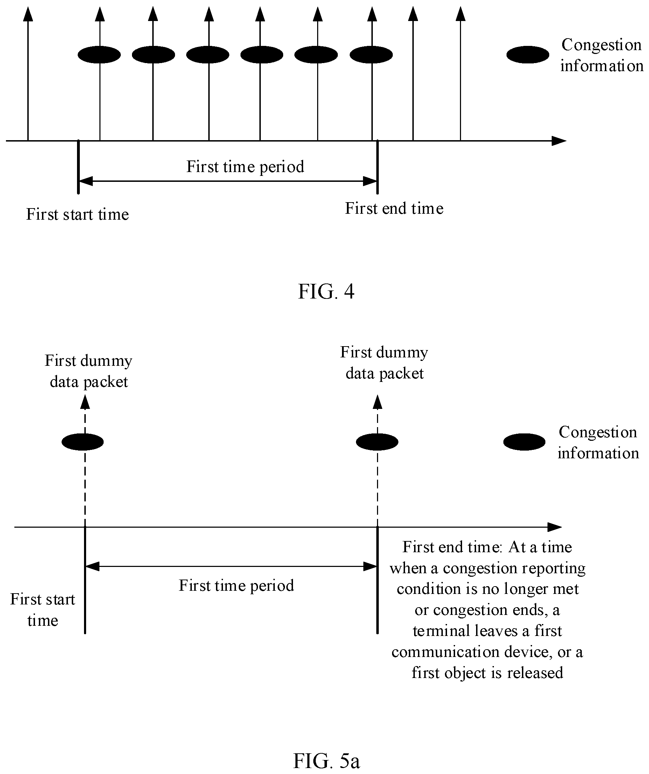

As shown in FIG. 4, a first communication device reports congestion information by using each uplink data packet of a first QoS flow within a first time period, where the first time period is a time period between a first start time and a first end time.

### Case 2

As shown in FIG. 5a, if no uplink data packet of a first QoS flow exists within a first time period, a first communication device generates a first dummy data packet at a first start time, where the first dummy data packet carries congestion information; and the first communication device generates a first dummy data packet at a first end time, where the first dummy data packet carries congestion information.

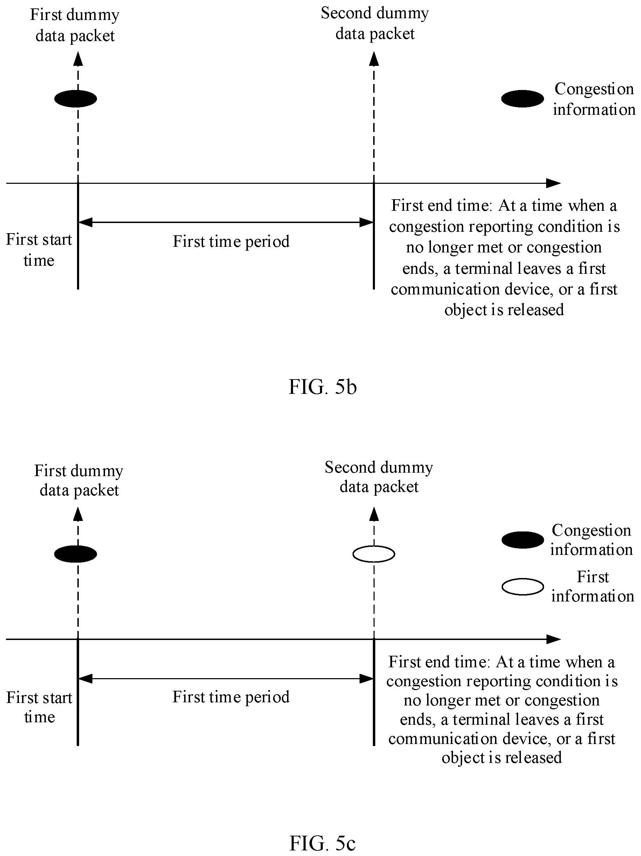

As shown in FIG. 5b, if no uplink data packet of a first QoS flow exists within a first time period, a first communication device generates a first dummy data packet at a first start time, where the first dummy data packet carries congestion information; and the first communication device generates a second dummy data packet at a first end time, where the second dummy data packet does not carry congestion information or does not carry first status information. Not carrying the first status information indicates that the second dummy data packet may not carry any congestion status information (for example, a first bit is not carried or a first bit is set to 0).

As shown in FIG. 5c, if no uplink data packet of a first QoS flow exists within a first time period, a first communication device generates a first dummy data packet at a first start time, where the first dummy data packet carries congestion information; and the first communication device generates a second dummy data packet at a first end time, where the second dummy data packet carries first information.

### Case 3

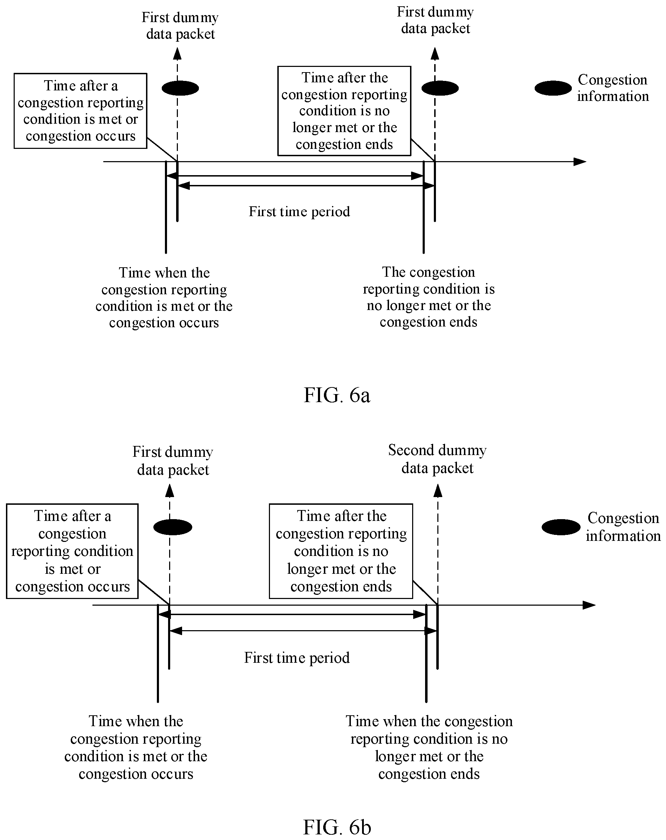

As shown in FIG. 6a, if no uplink data packet of a first QoS flow exists at a first start time, a first communication device generates a first dummy data packet, where the first dummy data packet carries congestion information; and the first communication device sends the first dummy data packet after the first start time. If no uplink data packet of the first QoS flow exists at a first end time, the first communication device generates a first dummy data packet, where the first dummy data packet carries congestion information; and the first communication device sends the first dummy data packet at a time after the first end time.

It should be noted herein that the first start time is a time when a congestion reporting condition is met or congestion occurs, and that the first end time is a time when the congestion reporting condition is no longer met or the congestion ends.

In an implementation, a time interval between a time after a target time (such as the first start time and the first end time) and the target time may be a processing duration.

The processing duration is long enough to perform a first action, a second action, a third action, or a fourth action, for example, long enough to allow an uplink data packet of the first QoS flow to carry congestion information or first information, and long enough to construct a dummy data packet so that the dummy data packet carries congestion information or first information.

As shown in FIG. 6b, an operation at a first start time is the same as that in FIG. 6a, and is not described herein again. A difference is as follows: If no uplink data packet of a first QoS flow exists at a first end time, a first communication device generates a second dummy data packet, where the second dummy data packet does not carry congestion information or does not carry first status information; and the first communication device sends the second dummy data packet at a time after the first end time.

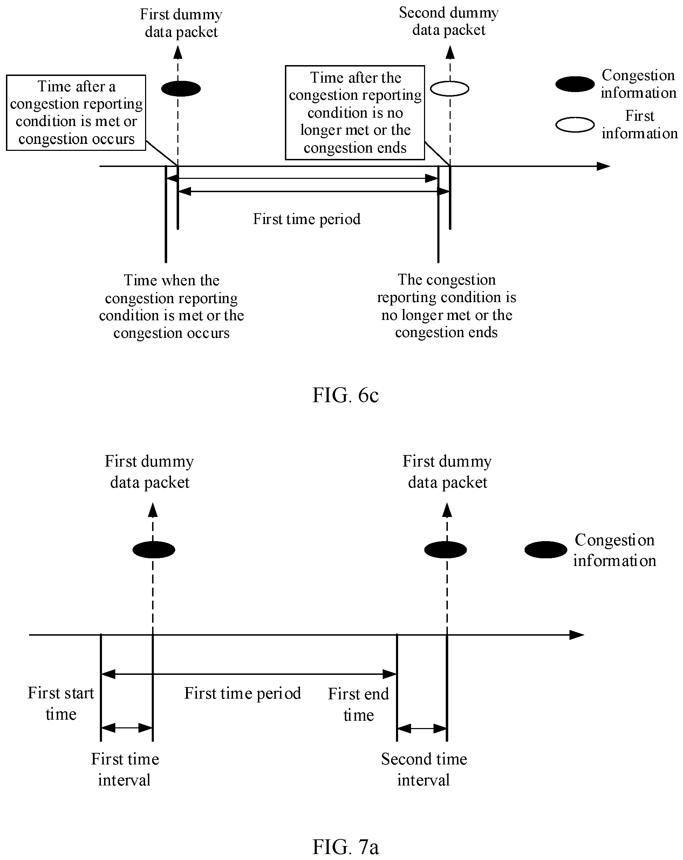

As shown in FIG. 6c, an operation at a first start time is the same as that in FIG. 6a, and is not described herein again. A difference is as follows: If no uplink data packet of a first QoS flow exists at a first end time, a first communication device generates a second dummy data packet, where the second dummy data packet carries first information; and the first communication device sends the second dummy data packet at a time after the first end time.

### Case 4

As shown in FIG. 7a, if no uplink data packet of a first QoS flow exists within a first time interval, a first communication device generates a first dummy data packet, where the first dummy data packet carries congestion information; and the first communication device sends the first dummy data packet. If no uplink data packet of the first QoS flow exists within a second time interval, the first communication device generates a first dummy data packet, where the first dummy data packet carries congestion information; and the first communication device sends the first dummy data packet.

It should be noted herein that the first time interval is a time interval starting from a first start time and that the second time interval is a time interval starting from a first end time.

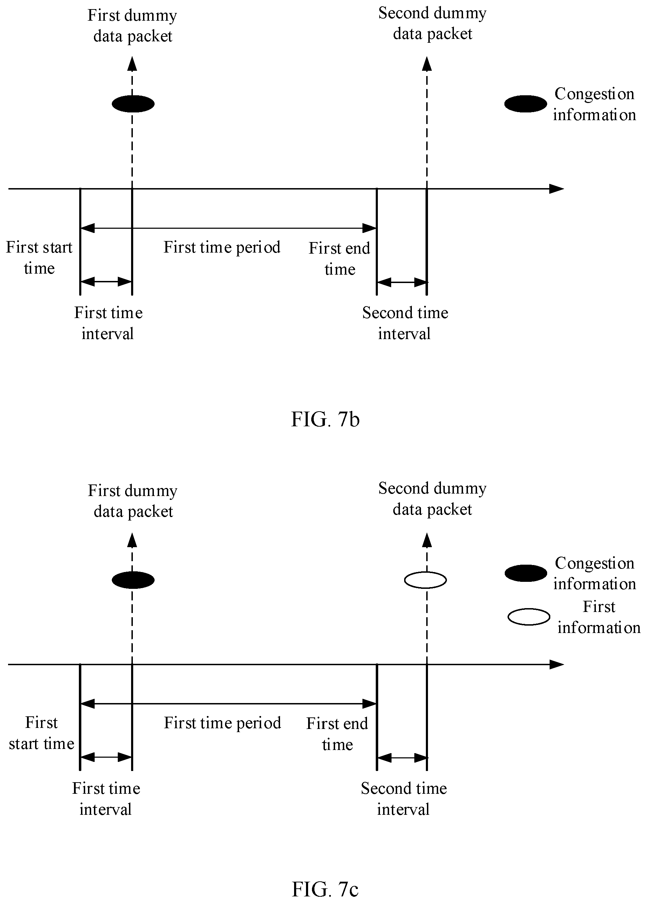

As shown in FIG. 7b, an operation at a first start time is the same as that in FIG. 7a, and is not described herein again. A difference is as follows: If no uplink data packet of a first QoS flow exists within a second time interval, a first communication device generates a second dummy data packet, where the second dummy data packet does not carry congestion information or does not carry first status information; and the first communication device sends the second dummy data packet.

As shown in FIG. 7c, an operation at a first start time is the same as that in FIG. 7a, and is not described herein again. A difference is as follows: If no uplink data packet of a first QoS flow exists within a second time interval, a first communication device generates a second dummy data packet, where the second dummy data packet carries first information; and the first communication device sends the second dummy data packet.

### Case 5

As shown in FIG. 8a, if no uplink data packet of a first QoS flow exists at a first start time, a first communication device starts a first timer. When the first timer expires, a first dummy data packet is generated, and the first timer is restarted, where the first dummy data packet carries congestion information. Then the foregoing process is repeated. If an uplink data packet of the first QoS flow is received at a time, the timing of the first timer is interrupted, congestion information is reported in the uplink data packet of the first QoS flow, and then the first timer is restarted. When the first timer expires, a first dummy data packet is generated, and the first timer is restarted, where the first dummy data packet carries congestion information. Then the foregoing process is repeated. When a first end time is reached, a first dummy data packet is generated, and the first timer is stopped, where the first dummy data packet carries congestion information.

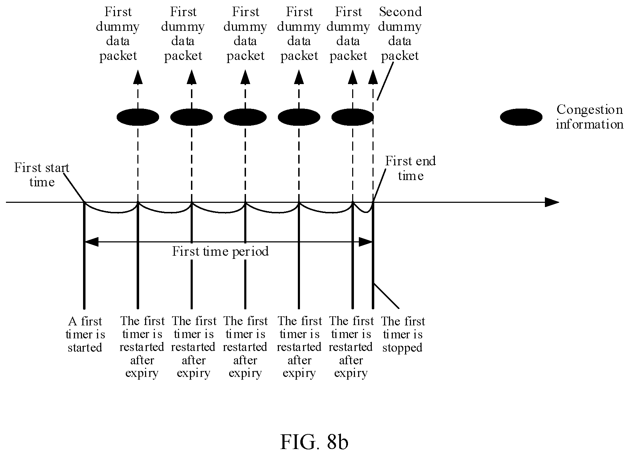

As shown in FIG. 8b, an operation at a first start time is the same as that in FIG. 8a, and is not described herein again. A difference is as follows: When a first end time is reached, a second dummy data packet is generated, and a first timer is stopped, where the second dummy data packet does not carry congestion information or does not carry first status information. The first communication device sends the second dummy data packet.

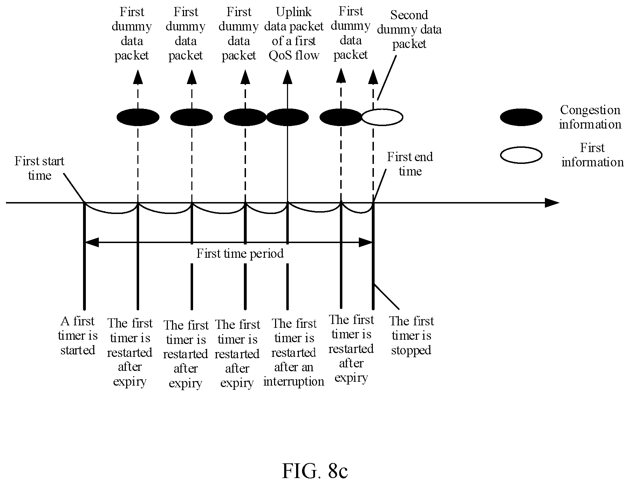

As shown in FIG. 8c, an operation at a first start time is the same as that in FIG. 8a, and is not described herein again. A difference is as follows: When a first end time is reached, a second dummy data packet is generated, and a first timer is stopped, where the second dummy data packet carries first information. The first communication device sends the second dummy data packet.

### Case 6

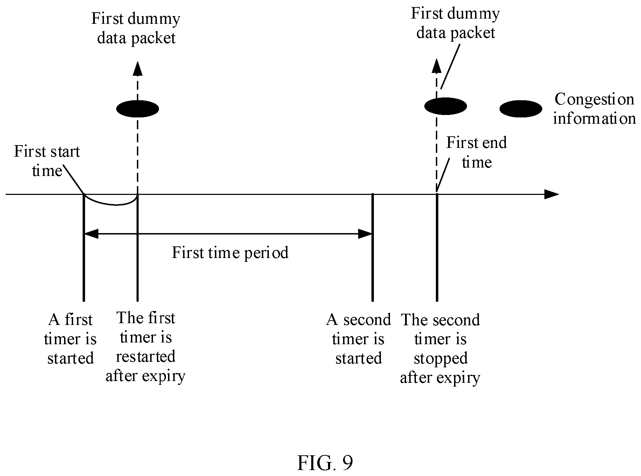

As shown in FIG. 9, if no uplink data packet of a first QoS flow exists at a first start time, a first communication device starts a first timer and generates a first dummy data packet when the first timer expires, where the first dummy data packet carries congestion information.

Optionally, when no uplink data packet of the first QoS flow exists at a first end time, the first communication device starts a second timer. When the second timer expires, in an implementation, a first dummy data packet is generated, where the first dummy data packet carries congestion information. In another implementation, a second dummy data packet is generated, where the second dummy data packet does not carry congestion information or does not carry first status information. In another implementation, when the first end time is reached, a second dummy data packet is generated, where the first dummy data packet carries second information.

Optionally, when the first end time is reached, a first dummy data packet is generated.

### Case 7

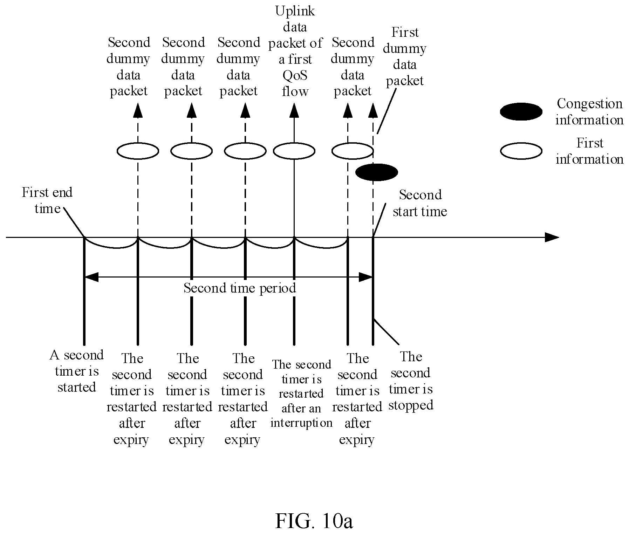

As shown in FIG. 10a, if no uplink data packet of a first QoS flow exists at a first end time, a first communication device starts a second timer. When the second timer expires, a second dummy data packet is generated, and the second timer is restarted, where the second dummy data packet carries first information. If an uplink data packet of the first QoS flow is received at a time, the timing of the second timer is interrupted, first information is reported in the uplink data packet of the first QoS flow, and then the second timer is restarted. When the second timer expires, a second dummy data packet is generated, and the first timer is restarted, where the second dummy data packet carries first information. Then the foregoing process is repeated. When a second start time is reached, a first dummy data packet is generated, and the second timer is stopped, where the first dummy data packet carries congestion information.

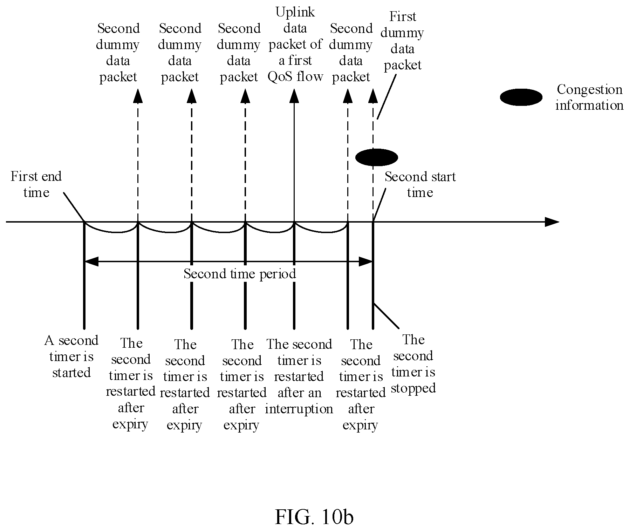

As shown in FIG. 10b, if no uplink data packet of a first QoS flow exists at a first end time, a first communication device starts a second timer. When the second timer expires, a second dummy data packet is generated, and the second timer is restarted, where the second dummy data packet does not carry congestion information or does not carry first status information. If an uplink data packet of the first QoS flow is received at a time, the timing of the second timer is interrupted, the uplink data packet of the first QoS flow does not carry congestion information or does not carry first status information, and then the second timer is restarted. When the second timer expires, a second dummy data packet is generated, and the first timer is restarted, where the second dummy data packet does not carry congestion information. Then the foregoing process is repeated. When a second start time is reached, a first dummy data packet is generated, and the second timer is stopped, where the first dummy data packet carries congestion information.

### Case 8

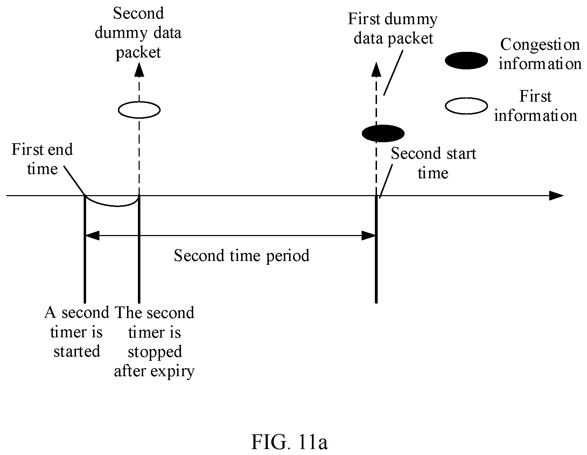

As shown in FIG. 11a, if no uplink data packet of a first QoS flow exists at a first end time, a first communication device starts a second timer and generates a second dummy data packet when the second timer expires, where the second dummy data packet carries first information. When a second start time is reached, the first communication device generates a first dummy data packet, where the first dummy data packet carries congestion information.

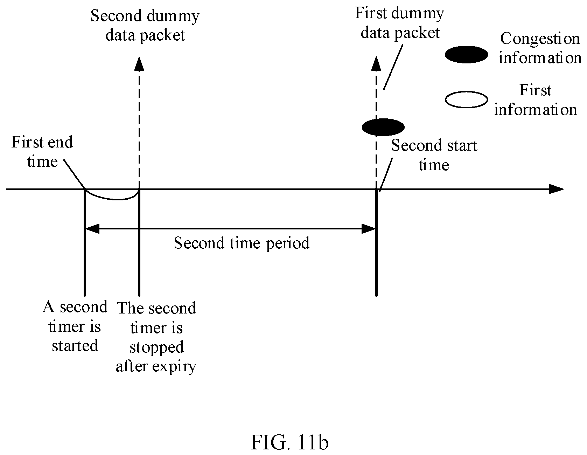

As shown in FIG. 11b, if no uplink data packet of a first QoS flow exists at a first end time, a first communication device starts a second timer and generates a second dummy data packet when the second timer expires, where the second dummy data packet does not carry congestion information or does not carry first status information. When a second start time is reached, the first communication device generates a first dummy data packet, where the first dummy data packet carries congestion information.

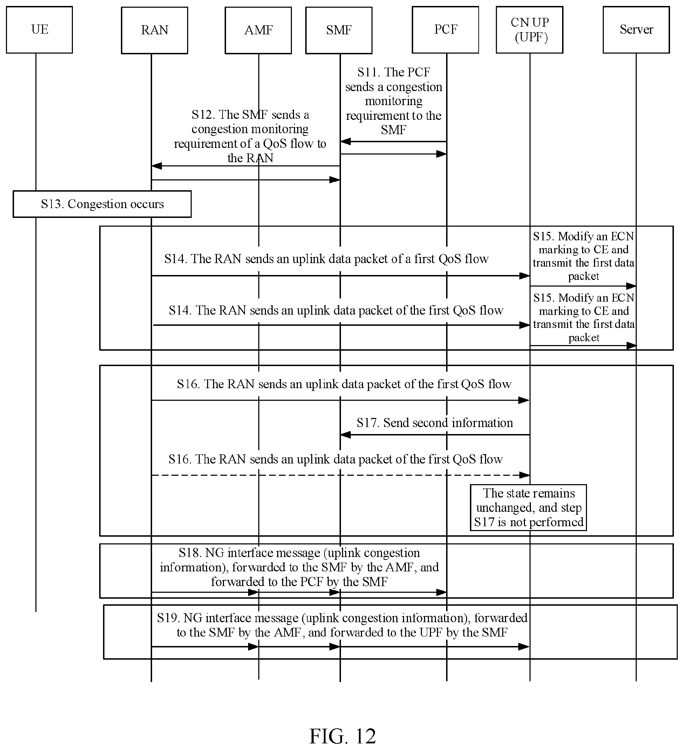

An uplink congestion processing procedure in application scenario 1 in the embodiments of the present invention is mainly described. Referring to FIG. 12, the uplink congestion processing procedure includes the following steps.

Step S11: A PCF sends a congestion monitoring requirement to an SMF, where the congestion monitoring requirement may include an uplink congestion monitoring requirement.

Optionally, the congestion monitoring requirement may be carried in a PCC rule.

Step S12: The SMF sends, to a RAN (short for a RAN network element), a congestion monitoring requirement corresponding to a QoS flow.

Step S13: Congestion occurs; and there are four options to send congestion information, that is, (1) steps S14 and S15, (2) steps S16 and S17, (3) step S18, and (4) step 19.

Step S14: The RAN sends an uplink data packet of a first QoS flow,
so that the uplink data packet carries congestion information, where the congestion information includes information used to indicate start of the congestion, information used to indicate a congestion level, and information used to indicate a congestion direction (the congestion direction in this case is uplink).

It should be noted that in step S14, the RAN continuously carries congestion information in different uplink data packets of the first QoS flow.

Step S15: After receiving the uplink data packet from the RAN, a UPF modifies an ECN marking in the uplink data packet to a value used to indicate occurrence of the congestion (that is, modifies the ECN marking to CE) and transmits the uplink data packet to a server.

It should be noted that step S15 corresponds to step S14, that is, the UPF needs to perform an operation of modifying an ECN marking every time the UPF receives an uplink data packet.

Step S16: The RAN sends an uplink data packet of the first QoS flow,
so that the uplink data packet carries congestion information, where the congestion information includes information used to indicate the start of the congestion, information used to indicate the congestion level, and information used to indicate the congestion direction.

It should be noted that in step S16, the RAN continuously carries congestion information in different uplink data packets of the first QoS flow.

Step S17: After receiving the uplink data packet from the RAN, the UPF sends second information to the SMF through N4 interface signaling; or the UPF directly exposes second information to another NF (such as the SMF, the PCF, a NEF, or an AF) through a service-based interface.

It should be noted that the second information is transmitted through the N4 interface signaling, and that the second information includes information used to indicate the start of the congestion and information used to indicate the congestion direction.

It should be noted that step S16 corresponds to step S17. Generally, the UPF performs an operation of sending the second information only when receiving a first data packet for the first time. When the congested state remains unchanged, step S17 is not performed, that is, the UPF does not send the second information.

In other words, in this application scenario, the RAN continuously adds congestion information to each uplink data packet of the first QoS flow within a time period when uplink congestion occurs; and the UPF also modifies an ECN marking in a corresponding uplink data packet to CE. In addition, in this application scenario, the RAN continuously adds the congestion information to each uplink data packet of the first QoS flow within the time period when the uplink congestion occurs; however, the UPF reports the congestion information only once through N4 signaling, instead of reporting the congestion information many times.

In a case that the congestion ends, the RAN stops adding the congestion information to each uplink data packet of the first QoS flow. When the UPF no longer receives the congestion information, the UPF may delete the congested state of the first QoS flow, and notify the end of the congestion through N4 signaling, or stop modifying the ECN marking, that is, implicitly notify the end of the congestion.

Step S18: When the congestion information (mainly uplink congestion information in this case) is transmitted to the PCF through control plane signaling, the congestion information may be sent to an AMF by the RAN, then forwarded to the SMF by the AMF, and then forwarded to the PCF by the SMF.

For example, the congestion information is transmitted by using an N4 interface message.

Step S19: When the congestion information (mainly uplink congestion information in this case) is transmitted to the UPF through control plane signaling, the congestion information may be sent to the AMF by the RAN, then forwarded to the SMF by the AMF, and then forwarded to the UPF by the SMF.

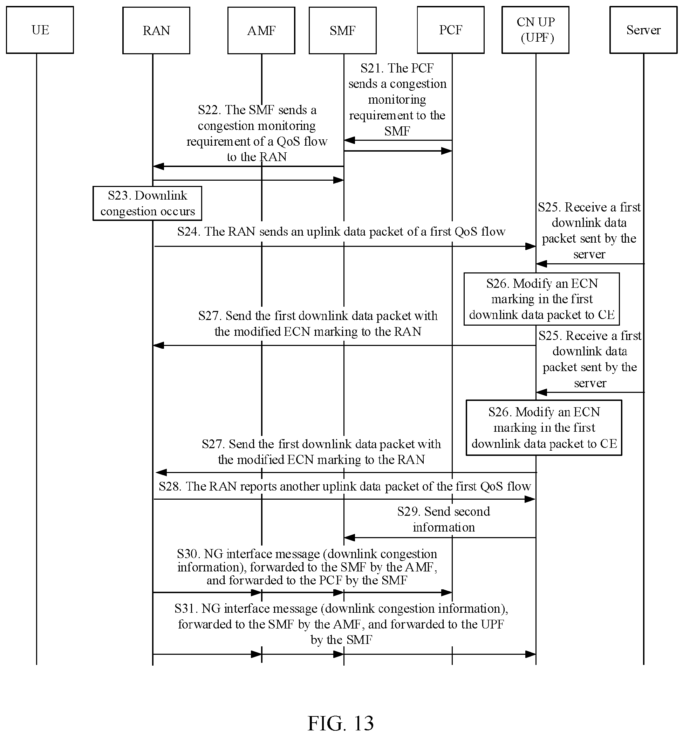

Application scenario 2 in the embodiments of the present invention:
A downlink congestion processing procedure in application scenario 2 in the embodiments of the present invention is mainly described. Referring to FIG. 13, the downlink congestion processing procedure includes the following steps.

Step S21: A PCF sends a congestion monitoring requirement to an SMF, where the congestion monitoring requirement may include a downlink congestion monitoring requirement.

Optionally, the congestion monitoring requirement may be carried in a PCC rule.

Step S22: The SMF sends, to a RAN (short for a RAN network element), a congestion monitoring requirement corresponding to a QoS flow.

Step S23: Downlink congestion occurs; and there are four options to send congestion information, that is, (1) steps S24 to S28, (2) step S29, (3) step S30, and (4) step S31.

Step S24: The RAN sends an uplink data packet of a first QoS flow,
so that the uplink data packet carries congestion information, where the congestion information includes information used to indicate start of the congestion and information used to indicate a congestion direction (the congestion direction in this case is downlink).

It should be noted that in step S14, the RAN continuously carries congestion information in different uplink data packets of the first QoS flow.

Step S25: Receive a first downlink data packet sent by a server.

Step S26: Modify an ECN marking in the received first downlink data packet sent by the server to a value used to indicate the occurrence of the congestion (that is, modify the ECN marking to CE).

Step S27: Send the first downlink data packet with the modified ECN marking to the RAN.

Step S28: The RAN sends another uplink data packet of the first QoS flow,
so that the uplink data packet carries congestion information, where the congestion information includes information used to indicate end of the congestion and information used to indicate the congestion direction (the congestion direction in this case is downlink).

In a case that the UPF knows that the downlink congestion ends, the UPF no longer modifies an ECN marking in the downlink data packet.

In other words, in this application scenario, the RAN continuously adds the congestion information to each uplink data packet of the first QoS flow within a time period when the downlink congestion occurs; and the UPF also modifies the ECN marking in the corresponding downlink data packet to CE.

In a case that the congestion ends, the RAN stops adding the congestion information to each uplink data packet of the first QoS flow. When the UPF no longer receives the congestion information, the UPF may delete the congested state of the first QoS flow and stop modifying the ECN marking in the downlink data packet.

Step S29: After receiving the uplink data packet from the RAN, the UPF may send second information to the SMF through N4 interface signaling; or the UPF directly exposes second information to another NF (such as the SMF, the PCF, a NEF, or an AF) through a service-based interface.

Step S30: When the congestion information (mainly downlink congestion information in this case) is transmitted to the PCF through control plane signaling, the congestion information may be sent to an AMF by the RAN, then forwarded to the SMF by the AMF, and then forwarded to the PCF by the SMF.

For example, the congestion information is transmitted by using an N4 interface message.

Step S31: When the congestion information (mainly downlink congestion information in this case) is transmitted to the UPF through control plane signaling, the congestion information may be sent to the AMF by the RAN, then forwarded to the SMF by the AMF, and then forwarded to the UPF by the SMF.

According to the embodiments of the present invention, when the QoS flow of the terminal is congested in the RAN, in the congestion process, the RAN continuously reports the congestion marking in each uplink packet of the QoS flow to implement an explicit congestion indication, and after the congestion ends, stops sending any congestion marking to implicitly indicate that the congestion ends. In this way, the congestion status can be updated in real time, so that the server or the client can know the congestion status in a timely manner even if the RAN network element has changed, thereby ensuring the throughput of the service data flow. In addition, the embodiments of the present invention clearly define how to report information at the critical point of the transition from meeting the congestion reporting condition to not meeting the congestion reporting condition, thereby ensuring an accurate indication of the congestion status.

The method provided in the embodiments of this application may be performed by an apparatus. An information processing apparatus provided in the embodiments of this application is described by assuming that the method is performed by the apparatus in the embodiments of this application.

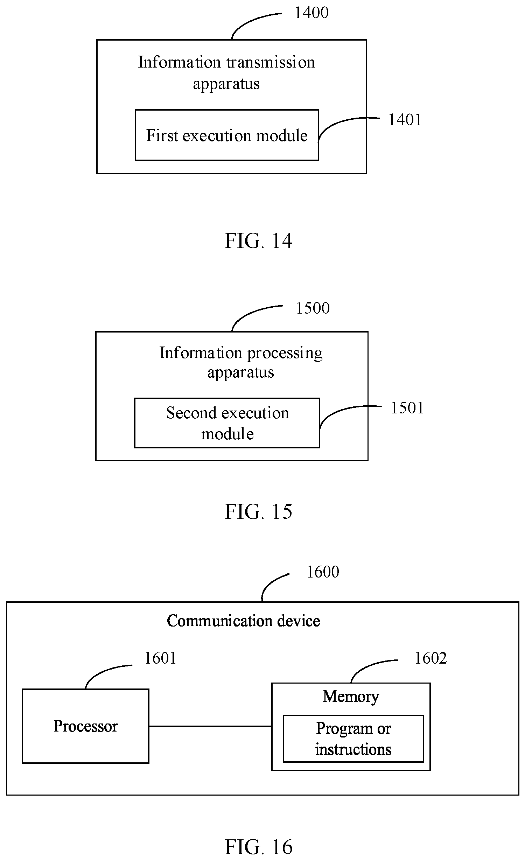

FIG. 14 is a schematic structural diagram of an information processing apparatus according to an embodiment of this application. The apparatus is applied to a first communication device. As shown in FIG. 14, the information processing apparatus 1400 includes:
a first execution module 1401, configured to perform a first operation, where the first operation includes at least one of the following:
an operation related to a first duration and/or a first timer;
an operation related to a second duration and/or a second timer;
performing a first action within a first time period, at a first time, and/or at a time after a first time;
performing a second action within a first time period, at a second time, and/or at a time after a second time;
performing a third action within a second time period, beyond a first time period, at a third time, and/or at a time after a third time;
performing a fourth action within a second time period, beyond a first time period, at a fourth time, and/or at a time after a fourth time;
if a first condition is met, performing a first action, where the first action includes reporting congestion information by using an uplink data packet of a first quality of service QoS flow, and that a first condition is met includes at least one of the following:
   a congestion reporting condition is met or congestion occurs;
   a transition from meeting a congestion reporting condition to not meeting a congestion reporting condition occurs, or a transition from not meeting a congestion reporting condition to meeting a congestion reporting condition occurs;
   a transition from congestion to no congestion occurs, or a transition from no congestion to congestion occurs;
   a terminal leaves the first communication device;
   a first object is released;
   a real uplink data packet of the first QoS flow exists at a first start time, at a first end time, within a first time interval, and/or within a first time period;
   within a first time period, at a first start time, at a time after a first start time, at a first end time, and/or at a time after a first end time; or
   within a first time period, at a first time, and/or at a time after a first time;
   if a second condition is met, performing a second action, where the second action includes at least one of the following: generating a first dummy data packet, or reporting congestion information by using a first dummy data packet, and that a second condition is met includes at least one of the following:
      a congestion reporting condition is met or congestion occurs;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first start time, at a first end time, within a first time interval, and/or within a first time period;
         a first timer stops, or a first timer expires;
         a terminal leaves the first communication device;
         a first object is released;
         within a first time period, at a first start time, at a time after a first start time, at a first end time, and/or at a time after a first end time; or
         within a first time period, at a second time, and/or at a time after a second time;
         if a third condition is met, performing a third action, where the third action includes one of the following: stopping reporting congestion information by using an uplink data packet of a first QoS flow, stopping generating a first dummy data packet, not reporting first status information by using an uplink data packet of a first QoS flow, or reporting first information by using an uplink data packet of a first QoS flow, where the first status information includes at least one of the following: a first bit, the congestion information, and/or the first information, and that a third condition is met includes at least one of the following:
            a congestion reporting condition is no longer met, congestion ends, a congestion reporting condition is not met, or there is no congestion;
            a transition from meeting a congestion reporting condition to not meeting a congestion reporting condition occurs, or a transition from not meeting a congestion reporting condition to meeting a congestion reporting condition occurs;
            a transition from congestion to no congestion occurs, or a transition from no congestion to congestion occurs;
            a real uplink data packet of the first QoS flow exists at a first end time, within a second time interval, beyond a first time period, and/or within a second time period;
            within a second time period, beyond a first time period, at a first end time, and/or after a first end time; or

   within a second time period, beyond a first time period, at a third time, and/or at a time after a third time; or
      if a fourth condition is met, performing a fourth action, where the fourth action includes at least one of the following: generating a second dummy data packet, not carrying first status information in a second dummy data packet, or reporting first information by using a second dummy data packet, where the first status information includes at least one of the following: a first bit, congestion information, and/or the first information, and that a fourth condition is met includes at least one of the following:
      a congestion reporting condition is no longer met, congestion ends, a congestion reporting condition is not met, or there is no congestion;
      a transition from meeting a congestion reporting condition to not meeting a congestion reporting condition occurs, or a transition from not meeting a congestion reporting condition to meeting a congestion reporting condition occurs;
      a transition from congestion to no congestion occurs, or a transition from no congestion to congestion occurs;
      no uplink data packet of a first QoS flow exists at a first end time, within a second time interval, beyond a first time period, and/or within a second time period;
      a second timer stops, or a second timer expires;
      a terminal leaves the first communication device;
      a first object is released;
      within a second time period, beyond a first time period, at a first end time, and/or after a first end time; or
   within a second time period, beyond a first time period, at a fourth time, and/or at a time after a fourth time;
      where
      the first dummy data packet is a dummy data packet in an uplink direction in the first QoS flow;
      the second dummy data packet is a dummy data packet in the uplink direction in the first QoS flow; and
      the first object includes at least one of the following: the first QoS flow, a first radio bearer, and first logical information;
      where
      the first time includes one of the following: the first start time, the first end time, a time when the terminal leaves the first communication device, a time when the first object is released, the time after the first start time, the time after the first end time, a time after the terminal leaves the first communication device, or a time after the first object is released;
      the time after the first time includes one of the following: the time after the first start time, the time after the first end time, the time after the terminal leaves the first communication device, or the time after the first object is released;
      the second time includes one of the following: the first start time, the first end time, an end time of the first time interval, a time when the first timer expires, a time when the first timer stops, the time when the terminal leaves the first communication device, the time when the first object is released, the time after the first start time, the time after the first end time, a time after the end of the first time interval, a time after the first timer expires, a time after the first timer stops, the time after the terminal leaves the first communication device, or the time after the first object is released;
      the time after the second time includes one of the following: the time after the first start time, the time after the first end time, the time after the end of the first time interval, the time after the first timer expires, the time after the first timer stops, the time after the terminal leaves the first communication device, or the time after the first object is released;
      the third time includes one of the following: the first end time, the time when the terminal leaves the first communication device, the time when the first object is released, the time after the first end time, the time after the terminal leaves the first communication device, the time after the first object is released, or a time beyond the first time period;
      the time after the third time includes one of the following: the time after the first end time, the time after the terminal leaves the first communication device, the time after the first object is released, or the time beyond the first time period;
      the fourth time includes one of the following: the first end time, an end time of the second time interval, a time when the second timer expires, a time when the second timer stops, the time when the terminal leaves the first communication device, the time when the first object is released, the time after the first end time, a time after the end of the second time interval, a time after the second timer expires, a time after the second timer stops, the time after the terminal leaves the first communication device, the time after the first object is released, or the time beyond the first time period; and
      the time after the fourth time includes one of the following: the time after the first end time, the time after the end of the second time interval, the time after the second timer expires, the time after the second timer stops, the time after the terminal leaves the first communication device, the time after the first object is released, or the time beyond the first time period;
      where
      the first time period is one of the following: a time period between the first start time and the first end time, or a time period when the congestion occurs;
      the first start time is one of the following: a time when the congestion reporting condition is met or the congestion occurs, or a time after the congestion reporting condition is met or the congestion occurs; and
      the first end time is one of the following: a time when a last uplink data packet carrying congestion information is sent, a time when the congestion reporting condition is no longer met or the congestion ends, a time when the congestion reporting condition is not met or there is no congestion, the time when the terminal leaves the first communication device, the time when the first object is released, the time when the first timer stops, the time when the second timer stops, a time after the last uplink data packet carrying the congestion information is sent, a time after the congestion reporting condition is no longer met or the congestion ends, a time after the congestion reporting condition is not met or there is no congestion, the time after the terminal leaves the first communication device, the time after the first object is released, the time after the first timer stops, or the time after the second timer stops;
      where
      the second time period is one of the following: a time period between the second start time and the second end time, or a time period when the congestion ends or there is no congestion;
      the second start time is one of the following: the time when the last uplink data packet carrying the congestion information is sent, the time when the congestion reporting condition is no longer met or the congestion ends, the time when the congestion reporting condition is not met or there is no congestion, the time after the last uplink data packet carrying the congestion information is sent, the time after the congestion reporting condition is no longer met or the congestion ends, or the time after the congestion reporting condition is not met or there is no congestion; and
      the second end time is one of the following: the time when the congestion reporting condition is met or the congestion occurs, the time after the congestion reporting condition is met or the congestion occurs, the time when the terminal leaves the first communication device, the time when the first object is released, the time when the second timer stops, the time after the terminal leaves the first communication device, the time after the first object is released, or the time after the second timer stops;
      where
      the first time interval is a time interval based on the first start time; and
      the second time interval is a time interval based on the first end time.

Optionally,
the performing a first action within a first time period, at a first time, and/or at a time after a first time includes:
if the first condition is met, performing the first action within the first time period, at the first time, and/or at the time after the first time;
   and/or
the performing a second action within a first time period, at a second time, and/or at a time after a second time includes:
   if the second condition is met, performing the second action within the first time period, at the second time, and/or at the time after the second time;
      and/or
      the performing a third action within a second time period, beyond a first time period, at a third time, and/or at a time after a third time includes:
      if the third condition is met, performing the third action within the second time period, beyond the first time period, at the third time, and/or at the time after the third time;
         and/or
      the performing a fourth action within a second time period, beyond a first time period, at a fourth time, and/or at a time after a fourth time includes:
         if the fourth condition is met, performing the fourth action within the second time period, beyond the first time period, at the fourth time, and/or at the time after the fourth time.

Optionally, the reporting congestion information includes: reporting uplink congestion information; and/or
that a congestion reporting condition is met includes: an uplink congestion reporting condition is met; and/or
that congestion occurs includes: uplink congestion occurs; and/or
that congestion ends includes: uplink congestion ends; and/or
that a congestion reporting condition is no longer met includes: an uplink congestion reporting condition is no longer met; and/or
that a congestion reporting condition is not met includes: an uplink congestion reporting condition is not met; and/or
that there is no congestion includes: there is no uplink congestion; and/or
that the congestion information is not carried includes: uplink congestion information is not carried; and/or
the first information includes first uplink information; and/or
the first status information includes uplink first status information.

Optionally,
the reporting congestion information includes: reporting downlink congestion information; and/or
that a congestion reporting condition is met includes: a downlink congestion reporting condition is met; and/or
that congestion occurs includes: downlink congestion occurs; and/or
that congestion ends includes: downlink congestion ends; and/or
that a congestion reporting condition is no longer met includes: a downlink congestion reporting condition is no longer met; and/or
that a congestion reporting condition is not met includes: a downlink congestion reporting condition is not met; and/or
that there is no congestion includes: there is no downlink congestion; and/or
that the congestion information is not carried includes: downlink congestion information is not carried; and/or
the first information includes first downlink information; and/or
the first status information includes downlink first status information.

Optionally, the operation related to the first duration and/or the first timer includes at least one of the following:
obtaining the first duration;
determining a duration of the first timer based on the first duration;
periodically generating the first dummy data packet by using the first duration as a periodicity;
generating the first dummy data packet based on the first timer;
within the first time period, at the first start time, at the first end time, at the end time of the first time interval, at the time when the first timer expires, at a time when the first dummy data packet is generated, at a time when the first dummy data packet is sent, at a time when the uplink data packet of the first QoS flow is received, at a time when the uplink data packet of the first QoS flow is sent, at the time after the first start time, at the time after the first end time, at a time after the end time of the first time interval, at the time after the first timer expires, at a time after the first dummy data packet is sent, at a time after the first dummy data packet is generated, at a time after the uplink data packet of the first QoS flow is sent, and/or at a time after the uplink data packet of the first QoS flow is received, starting or restarting the first timer;
beyond the first time period, within the second time period, at the first end time, at the time when the first timer expires, at the time after the first end time, and/or at the time after the first timer expires, stopping the first timer;
if a fifth condition is met, starting or restarting the first timer, where that a fifth condition is met includes at least one of the following:
   the congestion reporting condition is met or the congestion occurs;
   the first timer expires;
   the uplink data packet of the first QoS flow is received, the uplink data packet of the first QoS flow is sent, or the first dummy data packet is sent; or

no uplink data packet of the first QoS flow exists at the first start time, at the first end time, within the first time interval, and/or within the first time period; or
   if a sixth condition is met, stopping the first timer, where that a sixth condition is met includes at least one of the following:
   the uplink data packet of the first QoS flow is received before the first timer expires;
   the first timer expires;
the congestion reporting condition is no longer met, the congestion ends, the congestion reporting condition is not met, or there is no congestion;
   the terminal leaves the first communication device; or
   the first object is released.

Optionally,
the operation related to the second duration and/or the second timer includes at least one of the following:
obtaining the second duration;
determining a duration of the second timer based on the second duration;
periodically generating the second dummy data packet by using the second duration as a periodicity;
generating the second dummy data packet based on the second timer;
beyond the first time period, within the second time period, at the first end time, at the end time of the second time interval, at the time when the second timer expires, at a time when the second dummy data packet is generated, at a time when the second dummy data packet is sent, at a time when the uplink data packet of the first QoS flow is received, at a time when the uplink data packet of the first QoS flow is sent, at the time after the first end time, at a time after the end time of the second time interval, at the time after the second timer expires, at a time after the second dummy data packet is sent, at a time after the second dummy data packet is generated, at a time after the uplink data packet of the first QoS flow is sent, and/or at a time after the uplink data packet of the first QoS flow is received, starting or restarting the second timer;
beyond the second time period, within the first time period, at the time when the second timer expires, at the first start time, at the time after the second timer expires, and/or at the time after the first start time, stopping the second timer;
in a case that a seventh condition is met, starting or restarting the second timer, where the seventh condition includes at least one of the following:
the congestion reporting condition is no longer met, the congestion ends, the congestion reporting condition is not met, or there is no congestion;
the second timer expires;
the uplink data packet of the first QoS flow is received;
the uplink data packet of the first QoS flow is sent, or the second dummy data packet is sent;
no uplink data packet of the first QoS flow exists at the first end time, within the second time interval, beyond the first time period, and/or within the second time period;
the terminal accesses the first communication device; or
the first object is established; or
in a case that an eighth condition is met, stopping the second timer, where the eighth condition includes at least one of the following:
   the uplink data packet of the first QoS flow is received before the second timer expires;
   the second timer expires;
   the congestion reporting condition is met or the congestion occurs;
   the first time period is entered;
   the terminal leaves the first communication device; or
   the first object is released.

Optionally,
the first dummy data packet includes one or more dummy data packets;
   and/or
in a case that a quantity of first dummy data packets is greater than and/or equal to 2, a time interval between two consecutive first dummy data packets is the first duration or a duration of the first timer; and
the second dummy data packet includes one or more dummy data packets;
   and/or
in a case that a quantity of second dummy data packets is greater than and/or equal to 2, a time interval between two consecutive second dummy data packets is the second duration or a duration of the second timer.

Optionally, the reporting congestion information by using an uplink data packet of a first quality of service QoS flow includes at least one of the following:
allowing each uplink data packet of the first QoS flow to carry the congestion information; or
continuously reporting the congestion information by using a plurality of uplink data packets of the first QoS flow;
   and/or
the reporting first information by using an uplink data packet of a first QoS flow includes at least one of the following:
   allowing each uplink data packet of the first QoS flow to carry the first information; or
   continuously reporting the first information by using a plurality of uplink data packets of the first QoS flow.

Optionally, the congestion information includes at least one of the following:
information used to indicate start of the congestion or occurrence of the congestion;
information used to indicate a congestion level;
information used to indicate a congestion direction;

information used to indicate start of the uplink congestion or occurrence of the uplink congestion; or
information used to indicate start of the downlink congestion or occurrence of the downlink congestion;
   and/or
   the uplink congestion information includes at least one of the following:
   information used to indicate an uplink congestion level; or
information used to indicate start of the uplink congestion or occurrence of the uplink congestion;
   and/or
   the downlink congestion information includes at least one of the following:
   information used to indicate a downlink congestion level; or
information used to indicate start of the downlink congestion or occurrence of the downlink congestion;
   and/or
   the first status information includes at least one of the following: the first bit, the congestion information, and/or the first information;
      and/or
   the uplink first status information includes at least one of the following: a first value of the first bit, a second value of the first bit, the uplink congestion information, and/or uplink first information;
      and/or
the downlink first status information includes at least one of the following: a third value of the first bit, a fourth value of the first bit, the downlink congestion information, and/or downlink first information;
   where
   the first value is a value used to indicate the uplink congestion information;
   the second value is a value used to indicate the uplink first information;
   the third value is a value used to indicate the downlink congestion information; and
   the fourth value is a value used to indicate the downlink first information.

Optionally, the first information includes at least one of the following:
information used to indicate the end of the congestion or no congestion;
information used to indicate a direction of the end of the congestion or no congestion;
information used to indicate the end of the uplink congestion or no uplink congestion; or
information used to indicate the end of the downlink congestion or no downlink congestion;
   and/or

the first uplink information includes information used to indicate the end of the downlink congestion or no downlink congestion;
   and/or
the first downlink information includes information used to indicate the end of the downlink congestion or no downlink congestion.

Optionally, that a congestion reporting condition is met includes at least one of the following:
a congestion reporting event occurs, a congestion level reaches a reporting level, the congestion occurs, the transition from the congestion to no congestion occurs, the transition from no congestion to the congestion occurs, the terminal accesses the first communication device or the terminal leaves the first communication device, or the first object is established in the first communication device or the first object is released in the first communication device.

Optionally, that a congestion reporting condition is no longer met or that a congestion reporting condition is not met includes at least one of the following:
a congestion reporting event is cleared or does not occur, the congestion ends or there is no congestion, a congestion level drops below a reporting level or does not reach a reporting level, the transition from the congestion to no congestion occurs, the transition from no congestion to the congestion occurs, the terminal leaves the first communication device, or the first object is released in the first communication device, where
the first object includes at least one of the following: the first QoS flow, the first radio bearer, a first logical channel, or the terminal.

Optionally, the congestion information, the first information, and/or the first status information is different from an explicit congestion notification ECN marking or an ECN marking for L4S.

According to the first communication device in this embodiment of this application, when the QoS flow of the terminal is congested in a RAN, in the congestion process, the RAN continuously reports the congestion marking in each uplink packet of the QoS flow, and after the congestion ends, stops sending any congestion marking to implicitly indicate that the congestion ends. In this way, the congestion status can be updated in real time, so that a server or a client can know the congestion status in a timely manner even if a RAN network element has changed, thereby ensuring a throughput of the service data flow. In addition, this embodiment of the present invention clearly defines how to report information at a critical point of the transition from meeting the congestion reporting condition to not meeting the congestion reporting condition, thereby ensuring an accurate indication of the congestion status.

The information processing apparatus 1400 provided in this embodiment of this application can implement each process implemented in the method embodiment in FIG. 2, with the same technical effect achieved. To avoid repetition, details are not described herein again.

FIG. 15 is a schematic structural diagram of an information processing apparatus according to an embodiment of this application. The apparatus is applied to a second communication device. As shown in FIG. 15, the information processing apparatus 1500 includes:
a second execution module 1502, configured to perform a second operation, where the second operation includes at least one of the following:
modifying a congestion marking in an uplink data packet to a value used to indicate occurrence of congestion;
stopping modifying a congestion marking in an uplink data packet to a value used to indicate occurrence of congestion;
modifying a congestion marking in a downlink data packet to a value used to indicate occurrence of congestion;
stopping modifying a congestion marking in a downlink data packet to a value used to indicate occurrence of congestion;
performing a fifth action, where the fifth action includes at least one of the following:
   sending second information;
   saving or updating congestion information;
   modifying a status of a first object to a congested state;
   modifying a congestion marking in a data packet to a value used to indicate occurrence of congestion; or
   discarding an uplink dummy data packet, where the uplink dummy data packet includes a first dummy data packet and/or a second dummy data packet; or
   performing a sixth action, where the sixth action includes at least one of the following:
      sending third information;
      deleting congestion information;
      modifying a status of a first object to an uncongested state;
      stopping modifying a congestion marking in a data packet to a value used to indicate occurrence of congestion; or
      discarding an uplink dummy data packet, where the uplink dummy data packet includes a first dummy data packet and/or a second dummy data packet;
      where
      the second information includes at least one of the following:
         information used to indicate start of the congestion or occurrence of the congestion;
         information used to indicate a congestion level;
         information used to indicate a congestion direction;
         information used to indicate start of uplink congestion or occurrence of uplink congestion; or
         information used to indicate start of downlink congestion or occurrence of downlink congestion; and
         the third information includes at least one of the following:
            information used to indicate end of the congestion or no congestion;
            information used to indicate the congestion direction;
            information used to indicate end of the uplink congestion or no uplink congestion; or
            information used to indicate end of the downlink congestion or no downlink congestion.

Optionally,
the saving or updating congestion information includes: saving or updating downlink congestion information, saving or updating downlink congestion information within a first time period, or saving or updating downlink congestion information based on received downlink congestion information; and/or
the modifying a status of a first object to a congested state includes: modifying the status of the first object in a downlink direction to a downlink congested state, or modifying the status of the first object to a downlink congested state within a first time period; and/or
the modifying a congestion marking in a data packet to a value used to indicate occurrence of congestion includes: modifying the congestion marking in the downlink data packet to the value used to indicate occurrence of the congestion, or within a first time period or in a case that the status of the first object is a downlink congested state, modifying a congestion marking in a downlink data packet of the first object to the value used to indicate occurrence of the congestion; and/or
the deleting congestion information includes: deleting downlink congestion information; and/or
the modifying a status of a first object to an uncongested state includes: modifying the status of the first object to a downlink uncongested state; and/or
the stopping modifying a congestion marking in a data packet to a value used to indicate occurrence of congestion includes: stopping modifying the congestion marking in the downlink data packet to the value used to indicate occurrence of the congestion.

Optionally,
the saving or updating congestion information includes: saving or updating uplink congestion information, saving or updating uplink congestion information within a first time period, or saving or updating uplink congestion information based on received uplink congestion information; and/or
the modifying a status of a first object to a congested state includes: modifying the status of the first object to an uplink congested state, or modifying the status of the first object to an uplink congested state within a first time period; and/or
the modifying a congestion marking in a data packet to a value used to indicate occurrence of congestion includes: modifying the congestion marking in the uplink data packet to the value used to indicate occurrence of the congestion, or within a first time period or in a case that the status of the first object is an uplink congested state, modifying a congestion marking in an uplink data packet of the first object to the value used to indicate occurrence of the congestion; and/or
the deleting congestion information includes: deleting uplink congestion information; and/or
the modifying a status of a first object to an uncongested state includes: modifying the status of the first object to an uplink uncongested state; and/or
the stopping modifying a congestion marking in a data packet to a value used to indicate occurrence of congestion includes: stopping modifying the congestion marking in the uplink data packet to the value used to indicate occurrence of the congestion.

Optionally, the modifying a congestion marking in an uplink data packet to a value used to indicate occurrence of congestion includes: in a case that a ninth condition is met, modifying the congestion marking in the uplink data packet to the value used to indicate occurrence of the congestion, where
the ninth condition includes at least one of the following:
the received uplink data packet carries uplink congestion information; or
uplink congestion information is received from control plane signaling.

Optionally, the stopping modifying a congestion marking in an uplink data packet to a value used to indicate occurrence of congestion includes:
in a case that a tenth condition is met, stopping modifying the congestion marking in the uplink data packet to the value used to indicate occurrence of the congestion, where
the tenth condition includes at least one of the following:
   the received uplink data packet carries uplink first information;
   the received uplink data packet does not carry uplink congestion information and/or does not carry uplink first information;
   the received uplink data packet does not carry uplink first status information; or
   uplink first information is received from control plane signaling.

Optionally, the modifying a congestion marking in a downlink data packet to a value used to indicate occurrence of congestion includes:
in a case that an eleventh condition is met, modifying the congestion marking in the downlink data packet to the value used to indicate occurrence of the congestion, where
the eleventh condition includes at least one of the following:
   the received uplink data packet carries downlink congestion information; or
   downlink congestion information is received from control plane signaling.

Optionally, the stopping modifying a congestion marking in a downlink data packet to a value used to indicate occurrence of congestion includes:
in a case that a twelfth condition is met, stopping modifying the congestion marking in the downlink data packet to the value used to indicate occurrence of the congestion, where
the twelfth condition includes at least one of the following:
   the received uplink data packet carries downlink first information;
   the received uplink data packet does not carry downlink congestion information;
   the received uplink data packet does not carry downlink first status information; or
   downlink first information is received from control plane signaling.

Optionally,
the performing a fifth action includes: within a first time period and/or in a case that a thirteenth condition is met, performing the fifth action; and/or
the performing a sixth action includes: within a second time period and/or in a case that a fourteenth condition is met, performing the sixth action, where
the thirteenth condition includes at least one of the following:
   congestion information is received from control plane signaling;
   a first target data packet is received; or
   a received first target data packet is the first of one or more type-1 target data packets, where
   the type-1 target data packet includes an uplink data packet carrying congestion information; and
   the fourteenth condition includes at least one of the following:
      first information is received from control plane signaling;
      a second target data packet is received; or
      a received second target data packet is the first of a plurality of type-2 target data packets, where
      the type-2 target data packet meets one of the following:
         an uplink data packet that does not carry first status information;
         an uplink data packet that does not carry congestion information; or
         an uplink data packet that carries first information.

Optionally,
the congested state includes an uplink congested state; and/or
the congestion information includes uplink congestion information; and/or
the first information includes first uplink information.

Optionally,
the congested state includes a downlink congested state; and/or
the congestion information includes downlink congestion information; and/or
the first information includes first downlink information.

Optionally, the congestion information includes at least one of the following:
information used to indicate the start of the congestion or the occurrence of the congestion;
information used to indicate the congestion level;
information used to indicate the congestion direction;
information used to indicate the start of the uplink congestion or the occurrence of the uplink congestion; or
information used to indicate the start of the downlink congestion or the occurrence of the downlink congestion;
   and/or
the uplink congestion information includes at least one of the following:
   information used to indicate an uplink congestion level; or
   information used to indicate the start of the uplink congestion or the occurrence of the uplink congestion;
      and/or
   the downlink congestion information includes at least one of the following:
      information used to indicate a downlink congestion level; or
      information used to indicate the start of the downlink congestion or the occurrence of the downlink congestion;
         and/or
      the first status information includes at least one of the following: a first bit, the congestion information, and/or the first information;
         and/or
      uplink first status information includes at least one of the following: a first value of a first bit, a second value of a first bit, the uplink congestion information, and/or uplink first information;
         and/or
      the downlink first status information includes at least one of the following: a third value of a first bit, a fourth value of a first bit, the downlink congestion information, and/or downlink first information;
      where
      the first value is a value used to indicate the uplink congestion information;
      the second value is a value used to indicate the uplink first information;
      the third value is a value used to indicate the downlink congestion information; and
      the fourth value is a value used to indicate the downlink first information.

Optionally,
the first information includes at least one of the following:
information used to indicate the end of the congestion or no congestion;
information used to indicate a direction of the end of the congestion or no congestion;
information used to indicate the end of the uplink congestion or no uplink congestion; or
information used to indicate the end of the downlink congestion or no downlink congestion;
   and/or

the first uplink information includes information used to indicate the end of the downlink congestion or no downlink congestion;
   and/or
the first downlink information includes information used to indicate the end of the downlink congestion or no downlink congestion.

Optionally,
the first information and/or the first status information is different from an explicit congestion notification ECN marking or an ECN marking for L4S;
   and/or
the congestion marking includes an ECN marking or an ECN marking for L4S.

Optionally, the first time period is one of the following: a time period between a first start time and a first end time, or a time period when the congestion occurs;
the second time period is a time period when the congestion ends or there is no congestion;
the first start time is one of the following: a time when a congestion reporting condition is met or the congestion occurs, or a time after a congestion reporting condition is met or the congestion occurs; and
the first end time is one of the following: a time when a last uplink data packet carrying congestion information is sent, a time when the congestion reporting condition is no longer met or the congestion ends, a time when the congestion reporting condition is not met or there is no congestion, a time when a terminal leaves a first communication device, a time when the first object is released, a time when a first timer stops, a time when a second timer stops, a time after a last uplink data packet carrying congestion information is sent, a time after the congestion reporting condition is no longer met or the congestion ends, a time after the congestion reporting condition is not met or there is no congestion, a time after a terminal leaves a first communication device, a time after the first object is released, a time after a first timer stops, or a time after a second timer stops.

The information processing apparatus 1500 provided in this embodiment of this application can implement each process implemented in the method embodiment in FIG. 3, with the same technical effect achieved. To avoid repetition, details are not described herein again.

Optionally, as shown in FIG. 16, an embodiment of this application further provides a communication device 1600, including a processor 1601 and a memory 1602. The memory 1602 stores a program or instructions capable of running on the processor 1601. For example, when the communication device 1600 is a first communication device, and the program or instructions are executed by the processor 1601, the steps of the foregoing embodiment of the information processing method on the first communication device side are implemented, with the same technical effect achieved. When the communication device 1600 is a second communication device, and the program or instructions are executed by the processor 1601, the steps of the foregoing embodiment of the information processing method on the second communication device side are implemented, with the same technical effect achieved. To avoid repetition, details are not described herein again.

An embodiment of this application further provides a communication device, including a processor and a communication interface. The processor is configured to implement the steps of the foregoing method.

An embodiment of this application further provides a communication system, including a first communication device and a second communication device. The first communication device may be configured to perform the steps of the foregoing information processing method on the first communication device side. The second communication device may be configured to perform the steps of the foregoing information processing method on the second communication device side.

An embodiment of the present invention further provides a computer-readable storage medium. The computer-readable storage medium stores a computer program. When the computer program is executed by a processor, each process of the foregoing embodiment of any information processing method is implemented, with the same technical effect achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of the present invention essentially, or the part contributing to the related art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

The embodiments of the present invention are described above with reference to the accompanying drawings. However, the present invention is not limited to the foregoing specific embodiments. The foregoing specific embodiments are merely illustrative rather than restrictive. Inspired by the present invention, a person of ordinary skill in the art can still derive a plurality of variations without departing from the essence of the present invention and the protection scope of the claims. All these variations shall fall within the protection scope of the present invention.

## Claims

1. An information processing method, comprising:
performing, by a first communication device, a first operation, wherein the first operation comprises at least one of the following:
if a first condition is met, performing a first action, wherein the first action comprises reporting congestion information by using an uplink data packet of a first quality of service QoS flow, and that a first condition is met comprises at least one of the following:
a congestion reporting condition is met or congestion occurs;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
a terminal leaves the first communication device;
a first object is released;
a real uplink data packet of the first QoS flow exists at a first start time, at a first end time, within a first time interval, and/or within a first time period;
within a first time period, at a first start time, at a time after a first start time, at a first end time, and/or at a time after a first end time; or
within a first time period, at a first time, and/or at a time after a first time;
if a second condition is met, performing a second action, wherein the second action comprises at least one of the following: generating a first dummy data packet, or reporting congestion information by using a first dummy data packet, and that a second condition is met comprises at least one of the following:
a congestion reporting condition is met or congestion occurs;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
no uplink data packet of a first QoS flow exists at a first start time, at a first end time, within a first time interval, and/or within a first time period;
a first timer stops, or a first timer expires;
a terminal leaves the first communication device;
a first object is released;
within a first time period, at a first start time, at a time after a first start time, at a first end time, and/or at a time after a first end time; or
within a first time period, at a second time, and/or at a time after a second time;
an operation related to a first duration and/or a first timer;
an operation related to a second duration and/or a second timer;
performing a first action within a first time period, at a first time, and/or at a time after a first time;
performing a second action within a first time period, at a second time, and/or at a time after a second time;
performing a third action within a second time period, beyond a first time period, at a third time, and/or at a time after a third time;
performing a fourth action within a second time period, beyond a first time period, at a fourth time, and/or at a time after a fourth time;
if a third condition is met, performing a third action, wherein the third action comprises one of the following: stopping reporting congestion information by using an uplink data packet of a first QoS flow, stopping generating a first dummy data packet, not reporting first status information by using an uplink data packet of a first QoS flow, or reporting first information by using an uplink data packet of a first QoS flow, wherein the first status information comprises at least one of the following: a first bit, the congestion information, and/or the first information, and that a third condition is met comprises at least one of the following:
a congestion reporting condition is no longer met, congestion ends, a congestion reporting condition is not met, or there is no congestion;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
a real uplink data packet of the first QoS flow exists at a first end time, within a second time interval, beyond a first time period, and/or within a second time period;
within a second time period, beyond a first time period, at a first end time, and/or after a first end time; or
within a second time period, beyond a first time period, at a third time, and/or
at a time after a third time; or
if a fourth condition is met, performing a fourth action, wherein the fourth action comprises at least one of the following: generating a second dummy data packet, not carrying first status information in a second dummy data packet, or reporting first information by using a second dummy data packet, wherein the first status information comprises at least one of the following: a first bit, congestion information, and/or the first information, and that a fourth condition is met comprises at least one of the following:
a congestion reporting condition is no longer met, congestion ends, a congestion reporting condition is not met, or there is no congestion;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
no uplink data packet of a first QoS flow exists at a first end time, within a second time interval, beyond a first time period, and/or within a second time period;
a second timer stops, or a second timer expires;
a terminal leaves the first communication device;
a first object is released;
within a second time period, beyond a first time period, at a first end time, and/or after a first end time; or
within a second time period, beyond a first time period, at a fourth time, and/or at a time after a fourth time;
wherein
the first dummy data packet is a dummy data packet in an uplink direction in the first QoS flow;
the second dummy data packet is a dummy data packet in the uplink direction in the first QoS flow; and
the first object comprises at least one of the following: the first QoS flow, a first radio bearer, and first logical information;
wherein
the first time comprises one of the following: the first start time, the first end time, a time when the terminal leaves the first communication device, a time when the first object is released, the time after the first start time, the time after the first end time, a time after the terminal leaves the first communication device, or a time after the first object is released;
the time after the first time comprises one of the following: the time after the first start time, the time after the first end time, the time after the terminal leaves the first communication device, or the time after the first object is released;
the second time comprises one of the following: the first start time, the first end time, an end time of the first time interval, a time when the first timer expires, a time when the first timer stops, the time when the terminal leaves the first communication device, the time when the first object is released, the time after the first start time, the time after the first end time, a time after the end of the first time interval, a time after the first timer expires, a time after the first timer stops, the time after the terminal leaves the first communication device, or the time after the first object is released;
the time after the second time comprises one of the following: the time after the first start time, the time after the first end time, the time after the end of the first time interval, the time after the first timer expires, the time after the first timer stops, the time after the terminal leaves the first communication device, or the time after the first object is released;
the third time comprises one of the following: the first end time, the time when the terminal leaves the first communication device, the time when the first object is released, the time after the first end time, the time after the terminal leaves the first communication device, the time after the first object is released, or a time beyond the first time period;
the time after the third time comprises one of the following: the time after the first end time, the time after the terminal leaves the first communication device, the time after the first object is released, or the time beyond the first time period;
the fourth time comprises one of the following: the first end time, an end time of the second time interval, a time when the second timer expires, a time when the second timer stops, the time when the terminal leaves the first communication device, the time when the first object is released, the time after the first end time, a time after the end of the second time interval, a time after the second timer expires, a time after the second timer stops, the time after the terminal leaves the first communication device, the time after the first object is released, or the time beyond the first time period; and
the time after the fourth time comprises one of the following: the time after the first end time, the time after the end of the second time interval, the time after the second timer expires, the time after the second timer stops, the time after the terminal leaves the first communication device, the time after the first object is released, or the time beyond the first time period;
wherein
the first time period is one of the following: a time period between the first start time and the first end time, or a time period when the congestion occurs;
the first start time is one of the following: a time when the congestion reporting condition is met or the congestion occurs, or a time after the congestion reporting condition is met or the congestion occurs; and
the first end time is one of the following: a time when a last uplink data packet carrying congestion information is sent, a time when the congestion reporting condition is no longer met or the congestion ends, a time when the congestion reporting condition is not met or there is no congestion, the time when the terminal leaves the first communication device, the time when the first object is released, the time when the first timer stops, the time when the second timer stops, a time after the last uplink data packet carrying the congestion information is sent, a time after the congestion reporting condition is no longer met or the congestion ends, a time after the congestion reporting condition is not met or there is no congestion, the time after the terminal leaves the first communication device, the time after the first object is released, the time after the first timer stops, or the time after the second timer stops;
wherein
the second time period is one of the following: a time period between the second start time and the second end time, or a time period when the congestion ends or there is no congestion;
the second start time is one of the following: the time when the last uplink data packet carrying the congestion information is sent, the time when the congestion reporting condition is no longer met or the congestion ends, the time when the congestion reporting condition is not met or there is no congestion, the time after the last uplink data packet carrying the congestion information is sent, the time after the congestion reporting condition is no longer met or the congestion ends, or the time after the congestion reporting condition is not met or there is no congestion; and
the second end time is one of the following: the time when the congestion reporting condition is met or the congestion occurs, the time after the congestion reporting condition is met or the congestion occurs, the time when the terminal leaves the first communication device, the time when the first object is released, the time when the second timer stops, the time after the terminal leaves the first communication device, the time after the first object is released, or the time after the second timer stops;
wherein
the first time interval is a time interval based on the first start time; and
the second time interval is a time interval based on the first end time.

2. The method according to claim 1, wherein reporting downlink congestion information by using an uplink data packet of the first QoS flow comprises at least one of the following:
in a case that the uplink data packet of the first QoS flow exists, reporting the downlink congestion information by using the uplink data packet of the first QoS flow; or
in a case that no uplink data packet of the first QoS flow exists, generating the first dummy data packet, and reporting the downlink congestion information by using the first dummy data packet.

3. The method according to claim 1, wherein
the performing a first action within a first time period, at a first time, and/or at a time after a first time comprises:
if the first condition is met, performing the first action within the first time period, at the first time, and/or at the time after the first time;
and/or
the performing a second action within a first time period, at a second time, and/or at a time after a second time comprises:
if the second condition is met, performing the second action within the first time period, at the second time, and/or at the time after the second time;
and/or
the performing a third action within a second time period, beyond a first time period, at a third time, and/or at a time after a third time comprises:
if the third condition is met, performing the third action within the second time period, beyond the first time period, at the third time, and/or at the time after the third time;
and/or
the performing a fourth action within a second time period, beyond a first time period, at a fourth time, and/or at a time after a fourth time comprises:
if the fourth condition is met, performing the fourth action within the second time period, beyond the first time period, at the fourth time, and/or at the time after the fourth time.

4. The method according to claim 1, wherein
the reporting congestion information comprises: reporting uplink congestion information; and/or
that a congestion reporting condition is met comprises: an uplink congestion reporting condition is met; and/or
that congestion occurs comprises: uplink congestion occurs; and/or
that congestion ends comprises: uplink congestion ends; and/or
that a congestion reporting condition is no longer met comprises: an uplink congestion reporting condition is no longer met; and/or
that a congestion reporting condition is not met comprises: an uplink congestion reporting condition is not met; and/or
that there is no congestion comprises: there is no uplink congestion; and/or that the congestion information is not carried comprises: uplink congestion information is not carried; and/or
the first information comprises first uplink information; and/or
the first status information comprises uplink first status information.

5. The method according to claim 1, wherein
the reporting congestion information comprises: reporting downlink congestion information; and/or
that a congestion reporting condition is met comprises: a downlink congestion reporting condition is met; and/or
that congestion occurs comprises: downlink congestion occurs; and/or
that congestion ends comprises: downlink congestion ends; and/or
that a congestion reporting condition is no longer met comprises: a downlink congestion reporting condition is no longer met; and/or
that a congestion reporting condition is not met comprises: a downlink congestion reporting condition is not met; and/or
that there is no congestion comprises: there is no downlink congestion; and/or
that the congestion information is not carried comprises: downlink congestion information is not carried; and/or
the first information comprises first downlink information; and/or
the first status information comprises downlink first status information.

6. The method according to claim 1, wherein the operation related to the first duration and/or the first timer comprises at least one of the following:
obtaining the first duration;
determining a duration of the first timer based on the first duration;
periodically generating the first dummy data packet by using the first duration as a periodicity;
generating the first dummy data packet based on the first timer;
within the first time period, at the first start time, at the first end time, at the end time of the first time interval, at the time when the first timer expires, at a time when the first dummy data packet is generated, at a time when the first dummy data packet is sent, at a time when the uplink data packet of the first QoS flow is received, at a time when the uplink data packet of the first QoS flow is sent, at the time after the first start time, at the time after the first end time, at a time after the end time of the first time interval, at the time after the first timer expires, at a time after the first dummy data packet is sent, at a time after the first dummy data packet is generated, at a time after the uplink data packet of the first QoS flow is sent, and/or at a time after the uplink data packet of the first QoS flow is received, starting or restarting the first timer;
beyond the first time period, within the second time period, at the first end time, at the time when the first timer expires, at the time after the first end time, and/or at the time after the first timer expires, stopping the first timer;
if a fifth condition is met, starting or restarting the first timer, wherein that a fifth condition is met comprises at least one of the following:
the congestion reporting condition is met or the congestion occurs;
the first timer expires;
the uplink data packet of the first QoS flow is received, the uplink data packet of the first QoS flow is sent, or the first dummy data packet is sent; or
no uplink data packet of the first QoS flow exists at the first start time, at the first end time, within the first time interval, and/or within the first time period; or
if a sixth condition is met, stopping the first timer, wherein that a sixth condition is met comprises at least one of the following:
the uplink data packet of the first QoS flow is received before the first timer expires;
the first timer expires;
the congestion reporting condition is no longer met, the congestion ends, the congestion reporting condition is not met, or there is no congestion;
the terminal leaves the first communication device; or
the first object is released.

7. The method according to claim 1, wherein the operation related to the second duration and/or the second timer comprises at least one of the following:
obtaining the second duration;
determining a duration of the second timer based on the second duration;
periodically generating the second dummy data packet by using the second duration as a periodicity;
generating the second dummy data packet based on the second timer;
beyond the first time period, within the second time period, at the first end time, at the end time of the second time interval, at the time when the second timer expires, at a time when the second dummy data packet is generated, at a time when the second dummy data packet is sent, at a time when the uplink data packet of the first QoS flow is received, at a time when the uplink data packet of the first QoS flow is sent, at the time after the first end time, at a time after the end time of the second time interval, at the time after the second timer expires, at a time after the second dummy data packet is sent, at a time after the second dummy data packet is generated, at a time after the uplink data packet of the first QoS flow is sent, and/or at a time after the uplink data packet of the first QoS flow is received, starting or restarting the second timer;
beyond the second time period, within the first time period, at the time when the second timer expires, at the first start time, at the time after the second timer expires, and/or at the time after the first start time, stopping the second timer;
in a case that a seventh condition is met, starting or restarting the second timer, wherein the seventh condition comprises at least one of the following:
the congestion reporting condition is no longer met, the congestion ends, the congestion reporting condition is not met, or there is no congestion;
the second timer expires;
the uplink data packet of the first QoS flow is received;
the uplink data packet of the first QoS flow is sent, or the second dummy data packet is sent;
no uplink data packet of the first QoS flow exists at the first end time, within the second time interval, beyond the first time period, and/or within the second time period;
the terminal accesses the first communication device; or
the first object is established; or
in a case that an eighth condition is met, stopping the second timer, wherein the eighth condition comprises at least one of the following:
the uplink data packet of the first QoS flow is received before the second timer expires;
the second timer expires;
the congestion reporting condition is met or the congestion occurs;
the first time period is entered;
the terminal leaves the first communication device; or
the first object is released.

8. The method according to claim 1, wherein
the first dummy data packet comprises one or more dummy data packets;
and/or
in a case that a quantity of first dummy data packets is greater than and/or equal to 2, a time interval between two consecutive first dummy data packets is the first duration or a duration of the first timer; and
the second dummy data packet comprises one or more dummy data packets;
and/or
in a case that a quantity of second dummy data packets is greater than and/or equal to 2, a time interval between two consecutive second dummy data packets is the second duration or a duration of the second timer.

9. The method according to claim 1, wherein the reporting congestion information by using an uplink data packet of a first quality of service QoS flow comprises at least one of the following:
allowing each uplink data packet of the first QoS flow to carry the congestion information; or
continuously reporting the congestion information by using a plurality of uplink data packets of the first QoS flow;
and/or
the reporting first information by using an uplink data packet of a first QoS flow comprises at least one of the following:
allowing each uplink data packet of the first QoS flow to carry the first information; or
continuously reporting the first information by using a plurality of uplink data packets of the first QoS flow.

10. The method according to claim 1, 4, or 5, wherein the congestion information comprises at least one of the following:
information used to indicate start of the congestion or occurrence of the congestion;
information used to indicate a congestion level;
information used to indicate a congestion direction;
information used to indicate start of the uplink congestion or occurrence of the uplink congestion; or
information used to indicate start of the downlink congestion or occurrence of the downlink congestion;
and/or
the uplink congestion information comprises at least one of the following:
information used to indicate an uplink congestion level; or
information used to indicate start of the uplink congestion or occurrence of the uplink congestion;
and/or
the downlink congestion information comprises at least one of the following:
information used to indicate a downlink congestion level; or
information used to indicate start of the downlink congestion or occurrence of the downlink congestion;
and/or
the first status information comprises at least one of the following: the first bit, the congestion information, and/or the first information;
and/or
the uplink first status information comprises at least one of the following: a first value of the first bit, a second value of the first bit, the uplink congestion information, and/or uplink first information;
and/or
the downlink first status information comprises at least one of the following: a third value of the first bit, a fourth value of the first bit, the downlink congestion information, and/or downlink first information;
wherein
the first value is a value used to indicate the uplink congestion information;
the second value is a value used to indicate the uplink first information;
the third value is a value used to indicate the downlink congestion information; and
the fourth value is a value used to indicate the downlink first information.

11. The method according to claim 1, 4, or 5, wherein the first information comprises at least one of the following:
information used to indicate the end of the congestion or no congestion;
information used to indicate a direction of the end of the congestion or no congestion;
information used to indicate the end of the uplink congestion or no uplink congestion; or
information used to indicate the end of the downlink congestion or no downlink congestion;
and/or
the first uplink information comprises information used to indicate the end of the downlink congestion or no downlink congestion;
and/or
the first downlink information comprises information used to indicate the end of the downlink congestion or no downlink congestion.

12. The method according to claim 1 or 2, wherein that a congestion reporting condition is met comprises at least one of the following:
a congestion reporting event occurs, a congestion level reaches a reporting level, the congestion occurs, the transition from the congestion to no congestion occurs, the transition from no congestion to the congestion occurs, the terminal accesses the first communication device or the terminal leaves the first communication device, or the first object is established in the first communication device or the first object is released in the first communication device.

13. The method according to claim 1, wherein that a congestion reporting condition is no longer met or that a congestion reporting condition is not met comprises at least one of the following:
a congestion reporting event is cleared or does not occur, the congestion ends or there is no congestion, a congestion level drops below a reporting level or does not reach a reporting level, the transition from the congestion to no congestion occurs, the transition from no congestion to the congestion occurs, the terminal leaves the first communication device, or the first object is released in the first communication device, wherein
the first object comprises at least one of the following: the first QoS flow, the first radio bearer, a first logical channel, or the terminal.

14. The method according to claim 1, wherein the congestion information, the first information, and/or the first status information is different from an explicit congestion notification ECN marking or an ECN marking for L4S.

15. The method according to claim 11 or 2, wherein that the terminal accesses the first communication device comprises one of the following: an access request of the terminal is received, the terminal completes access to the first communication device, the terminal enters a connected state in the first communication device, a request for establishing a connection to the first communication device is received, a request for resuming a connection between the terminal and the first communication device is received, or the terminal is transferred from another communication device to the first communication device.

16. The method according to claim 15, wherein that the terminal is transferred from another communication device to the first communication device comprises one of the following: the terminal is handed over from the other communication device to the first communication device, or the terminal moves from the other communication device to the first communication device.

17. The method according to claim 16, wherein the first communication device comprises a RAN network element; and the other communication device comprises another RAN network element.

18. An information processing method, comprising:
performing, by a second communication device, a second operation, wherein the second operation comprises at least one of the following:
modifying a congestion marking in an uplink data packet to a value used to indicate occurrence of congestion;
stopping modifying a congestion marking in an uplink data packet to a value used to indicate occurrence of congestion;
modifying a congestion marking in a downlink data packet to a value used to indicate occurrence of congestion;
stopping modifying a congestion marking in a downlink data packet to a value used to indicate occurrence of congestion;
performing a fifth action, wherein the fifth action comprises at least one of the following:
sending second information;
saving or updating congestion information;
modifying a status of a first object to a congested state;
modifying a congestion marking in a data packet to a value used to indicate occurrence of congestion; or
discarding an uplink dummy data packet, wherein the uplink dummy data packet comprises a first dummy data packet and/or a second dummy data packet; or
performing a sixth action, wherein the sixth action comprises at least one of the following:
sending third information;
deleting congestion information;
modifying a status of a first object to an uncongested state;
stopping modifying a congestion marking in a data packet to a value used to indicate occurrence of congestion; or
discarding an uplink dummy data packet, wherein the uplink dummy data packet comprises a first dummy data packet and/or a second dummy data packet;
wherein the second information comprises at least one of the following:
information used to indicate start of the congestion or occurrence of the congestion;
information used to indicate a congestion level;
information used to indicate a congestion direction;
information used to indicate start of uplink congestion or occurrence of uplink congestion; or
information used to indicate start of downlink congestion or occurrence of downlink congestion; and
the third information comprises at least one of the following:
information used to indicate end of the congestion or no congestion;
information used to indicate the congestion direction;
information used to indicate end of the uplink congestion or no uplink congestion; or
information used to indicate end of the downlink congestion or no downlink congestion.

19. The method according to claim 18, wherein
the saving or updating congestion information comprises: saving or updating downlink congestion information, saving or updating downlink congestion information within a first time period, or saving or updating downlink congestion information based on received downlink congestion information; and/or
the modifying a status of a first object to a congested state comprises: modifying the status of the first object in a downlink direction to a downlink congested state, or modifying the status of the first object to a downlink congested state within a first time period; and/or
the modifying a congestion marking in a data packet to a value used to indicate occurrence of congestion comprises: modifying the congestion marking in the downlink data packet to the value used to indicate occurrence of the congestion, or within a first time period or in a case that the status of the first object is a downlink congested state, modifying a congestion marking in a downlink data packet of the first object to the value used to indicate occurrence of the congestion; and/or
the deleting congestion information comprises: deleting downlink congestion information; and/or
the modifying a status of a first object to an uncongested state comprises: modifying the status of the first object to a downlink uncongested state; and/or
the stopping modifying a congestion marking in a data packet to a value used to indicate occurrence of congestion comprises: stopping modifying the congestion marking in the downlink data packet to the value used to indicate occurrence of the congestion.

20. The method according to claim 18, wherein
the saving or updating congestion information comprises: saving or updating uplink congestion information, saving or updating uplink congestion information within a first time period, or saving or updating uplink congestion information based on received uplink congestion information; and/or
the modifying a status of a first object to a congested state comprises: modifying the status of the first object to an uplink congested state, or modifying the status of the first object to an uplink congested state within a first time period; and/or
the modifying a congestion marking in a data packet to a value used to indicate occurrence of congestion comprises: modifying the congestion marking in the uplink data packet to the value used to indicate occurrence of the congestion, or within a first time period or in a case that the status of the first object is an uplink congested state, modifying a congestion marking in an uplink data packet of the first object to the value used to indicate occurrence of the congestion; and/or
the deleting congestion information comprises: deleting uplink congestion information; and/or
the modifying a status of a first object to an uncongested state comprises: modifying the status of the first object to an uplink uncongested state; and/or
the stopping modifying a congestion marking in a data packet to a value used to indicate occurrence of congestion comprises: stopping modifying the congestion marking in the uplink data packet to the value used to indicate occurrence of the congestion.

21. The method according to claim 18, wherein the modifying a congestion marking in an uplink data packet to a value used to indicate occurrence of congestion comprises: in a case that a ninth condition is met, modifying the congestion marking in the uplink data packet to the value used to indicate occurrence of the congestion, wherein
the ninth condition comprises at least one of the following:
the received uplink data packet carries uplink congestion information; or
uplink congestion information is received from control plane signaling.

22. The method according to claim 18, wherein the stopping modifying a congestion marking in an uplink data packet to a value used to indicate occurrence of congestion comprises:
in a case that a tenth condition is met, stopping modifying the congestion marking in the uplink data packet to the value used to indicate occurrence of the congestion, wherein
the tenth condition comprises at least one of the following:
the received uplink data packet carries uplink first information;
the received uplink data packet does not carry uplink congestion information and/or does not carry uplink first information;
the received uplink data packet does not carry uplink first status information; or
uplink first information is received from control plane signaling.

23. The method according to claim 18, wherein the modifying a congestion marking in a downlink data packet to a value used to indicate occurrence of congestion comprises:
in a case that an eleventh condition is met, modifying the congestion marking in the downlink data packet to the value used to indicate occurrence of the congestion, wherein
the eleventh condition comprises at least one of the following:
the received uplink data packet carries downlink congestion information; or
downlink congestion information is received from control plane signaling.

24. The method according to claim 18, wherein the stopping modifying a congestion marking in a downlink data packet to a value used to indicate occurrence of congestion comprises:
in a case that a twelfth condition is met, stopping modifying the congestion marking in the downlink data packet to the value used to indicate occurrence of the congestion, wherein
the twelfth condition comprises at least one of the following:
the received uplink data packet carries downlink first information;
the received uplink data packet does not carry downlink congestion information;
the received uplink data packet does not carry downlink first status information; or
downlink first information is received from control plane signaling.

25. The method according to claim 18, wherein
the performing a fifth action comprises: within a first time period and/or in a case that a thirteenth condition is met, performing the fifth action; and/or
the performing a sixth action comprises: within a second time period and/or in a case that a fourteenth condition is met, performing the sixth action, wherein
the thirteenth condition comprises at least one of the following:
congestion information is received from control plane signaling;
a first target data packet is received; or
a received first target data packet is the first of one or more type-1 target data packets, wherein
the type-1 target data packet comprises an uplink data packet carrying congestion information; and
the fourteenth condition comprises at least one of the following:
first information is received from control plane signaling;
a second target data packet is received; or
a received second target data packet is the first of a plurality of type-2 target data packets, wherein
the type-2 target data packet meets one of the following:
an uplink data packet that does not carry first status information;
an uplink data packet that does not carry congestion information; or
an uplink data packet that carries first information.

26. The method according to claim 18 or 25, wherein
the congested state comprises an uplink congested state; and/or
the congestion information comprises uplink congestion information; and/or
the first information comprises first uplink information.

27. The method according to claim 18 or 25, wherein
the congested state comprises a downlink congested state; and/or
the congestion information comprises downlink congestion information; and/or
the first information comprises first downlink information.

28. The method according to any one of claims 18 to 20, 24, 26, and 27, wherein the congestion information comprises at least one of the following:
information used to indicate the start of the congestion or the occurrence of the congestion;
information used to indicate the congestion level;
information used to indicate the congestion direction;
information used to indicate the start of the uplink congestion or the occurrence of the uplink congestion; or
information used to indicate the start of the downlink congestion or the occurrence of the downlink congestion;
and/or
the uplink congestion information comprises at least one of the following:
information used to indicate an uplink congestion level; or
information used to indicate the start of the uplink congestion or the occurrence of the uplink congestion;
and/or
the downlink congestion information comprises at least one of the following:
information used to indicate a downlink congestion level; or
information used to indicate the start of the downlink congestion or the occurrence of the downlink congestion;
and/or
the first status information comprises at least one of the following: a first bit, the congestion information, and/or the first information;
and/or
uplink first status information comprises at least one of the following: a first value of a first bit, a second value of a first bit, the uplink congestion information, and/or uplink first information;
and/or
the downlink first status information comprises at least one of the following: a third value of a first bit, a fourth value of a first bit, the downlink congestion information, and/or downlink first information;
wherein
the first value is a value used to indicate the uplink congestion information;
the second value is a value used to indicate the uplink first information;
the third value is a value used to indicate the downlink congestion information; and
the fourth value is a value used to indicate the downlink first information.

29. The method according to any one of claims 24 to 27, wherein the first information comprises at least one of the following:
information used to indicate the end of the congestion or no congestion;
information used to indicate a direction of the end of the congestion or no congestion;
information used to indicate the end of the uplink congestion or no uplink congestion; or
information used to indicate the end of the downlink congestion or no downlink congestion;
and/or
the first uplink information comprises information used to indicate the end of the downlink congestion or no downlink congestion;
and/or
the first downlink information comprises information used to indicate the end of the downlink congestion or no downlink congestion.

30. The method according to claim 18 or 25, wherein
the first information and/or the first status information is different from an explicit congestion notification ECN marking or an ECN marking for L4S;
and/or
the congestion marking comprises an ECN marking or an ECN marking for L4S.

31. The method according to claim 19, 20, or 25, wherein the first time period is one of the following: a time period between a first start time and a first end time, or a time period when the congestion occurs;
the second time period is a time period when the congestion ends or there is no congestion;
the first start time is one of the following: a time when a congestion reporting condition is met or the congestion occurs, or a time after a congestion reporting condition is met or the congestion occurs; and
the first end time is one of the following: a time when a last uplink data packet carrying congestion information is sent, a time when the congestion reporting condition is no longer met or the congestion ends, a time when the congestion reporting condition is not met or there is no congestion, a time when a terminal leaves a first communication device, a time when the first object is released, a time when a first timer stops, a time when a second timer stops, a time after a last uplink data packet carrying congestion information is sent, a time after the congestion reporting condition is no longer met or the congestion ends, a time after the congestion reporting condition is not met or there is no congestion, a time after a terminal leaves a first communication device, a time after the first object is released, a time after a first timer stops, or a time after a second timer stops.

32. An information processing apparatus, applied to a first communication device and comprising:
a first execution module, configured to perform a first operation, wherein the first operation comprises at least one of the following:
if a first condition is met, performing a first action, wherein the first action comprises reporting congestion information by using an uplink data packet of a first quality of service QoS flow, and that a first condition is met comprises at least one of the following:
a congestion reporting condition is met or congestion occurs;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
a terminal leaves the first communication device;
a first object is released;
a real uplink data packet of the first QoS flow exists at a first start time, at a first end time, within a first time interval, and/or within a first time period;
within a first time period, at a first start time, at a time after a first start time, at a first end time, and/or at a time after a first end time; or
within a first time period, at a first time, and/or at a time after a first time;
if a second condition is met, performing a second action, wherein the second action comprises at least one of the following: generating a first dummy data packet, or reporting congestion information by using a first dummy data packet, and that a second condition is met comprises at least one of the following:
a congestion reporting condition is met or congestion occurs;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
no uplink data packet of a first QoS flow exists at a first start time, at a first end time, within a first time interval, and/or within a first time period;
a first timer stops, or a first timer expires;
a terminal leaves the first communication device;
a first object is released;
within a first time period, at a first start time, at a time after a first start time, at a first end time, and/or at a time after a first end time; or
within a first time period, at a second time, and/or at a time after a second time;
an operation related to a first duration and/or a first timer;
an operation related to a second duration and/or a second timer;
performing a first action within a first time period, at a first time, and/or at a time after a first time;
performing a second action within a first time period, at a second time, and/or at a time after a second time;
performing a third action within a second time period, beyond a first time period, at a third time, and/or at a time after a third time;
performing a fourth action within a second time period, beyond a first time period, at a fourth time, and/or at a time after a fourth time;
if a third condition is met, performing a third action, wherein the third action comprises one of the following: stopping reporting congestion information by using an uplink data packet of a first QoS flow, stopping generating a first dummy data packet, not reporting first status information by using an uplink data packet of a first QoS flow, or reporting first information by using an uplink data packet of a first QoS flow, wherein the first status information comprises at least one of the following: a first bit, the congestion information, and/or the first information, and that a third condition is met comprises at least one of the following:
a congestion reporting condition is no longer met, congestion ends, a congestion reporting condition is not met, or there is no congestion;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
a real uplink data packet of the first QoS flow exists at a first end time, within a second time interval, beyond a first time period, and/or within a second time period;
within a second time period, beyond a first time period, at a first end time, and/or after a first end time; or
within a second time period, beyond a first time period, at a third time, and/or at a time after a third time; or
if a fourth condition is met, performing a fourth action, wherein the fourth action comprises at least one of the following: generating a second dummy data packet, not carrying first status information in a second dummy data packet, or reporting first information by using a second dummy data packet, wherein the first status information comprises at least one of the following: a first bit, congestion information, and/or the first information, and that a fourth condition is met comprises at least one of the following:
a congestion reporting condition is no longer met, congestion ends, a congestion reporting condition is not met, or there is no congestion;
a transition from meeting a congestion reporting condition to not meeting a congestion reporting condition occurs, or a transition from not meeting a congestion reporting condition to meeting a congestion reporting condition occurs;
a transition from congestion to no congestion occurs, or a transition from no congestion to congestion occurs;
no uplink data packet of a first QoS flow exists at a first end time, within a second time interval, beyond a first time period, and/or within a second time period;
a second timer stops, or a second timer expires;
a terminal leaves the first communication device;
a first object is released;
within a second time period, beyond a first time period, at a first end time, and/or after a first end time; or
within a second time period, beyond a first time period, at a fourth time, and/or at a time after a fourth time;
wherein
the first dummy data packet is a dummy data packet in an uplink direction in the first QoS flow;
the second dummy data packet is a dummy data packet in the uplink direction in the first QoS flow; and
the first object comprises at least one of the following: the first QoS flow, a first radio bearer, and first logical information;
wherein
the first time comprises one of the following: the first start time, the first end time, a time when the terminal leaves the first communication device, a time when the first object is released, the time after the first start time, the time after the first end time, a time after the terminal leaves the first communication device, or a time after the first object is released;
the time after the first time comprises one of the following: the time after the first start time, the time after the first end time, the time after the terminal leaves the first communication device, or the time after the first object is released;
the second time comprises one of the following: the first start time, the first end time, an end time of the first time interval, a time when the first timer expires, a time when the first timer stops, the time when the terminal leaves the first communication device, the time when the first object is released, the time after the first start time, the time after the first end time, a time after the end of the first time interval, a time after the first timer expires, a time after the first timer stops, the time after the terminal leaves the first communication device, or the time after the first object is released;
the time after the second time comprises one of the following: the time after the first start time, the time after the first end time, the time after the end of the first time interval, the time after the first timer expires, the time after the first timer stops, the time after the terminal leaves the first communication device, or the time after the first object is released;
the third time comprises one of the following: the first end time, the time when the terminal leaves the first communication device, the time when the first object is released, the time after the first end time, the time after the terminal leaves the first communication device, the time after the first object is released, or a time beyond the first time period;
the time after the third time comprises one of the following: the time after the first end time, the time after the terminal leaves the first communication device, the time after the first object is released, or the time beyond the first time period;
the fourth time comprises one of the following: the first end time, an end time of the second time interval, a time when the second timer expires, a time when the second timer stops, the time when the terminal leaves the first communication device, the time when the first object is released, the time after the first end time, a time after the end of the second time interval, a time after the second timer expires, a time after the second timer stops, the time after the terminal leaves the first communication device, the time after the first object is released, or the time beyond the first time period; and
the time after the fourth time comprises one of the following: the time after the first end time, the time after the end of the second time interval, the time after the second timer expires, the time after the second timer stops, the time after the terminal leaves the first communication device, the time after the first object is released, or the time beyond the first time period;
wherein
the first time period is one of the following: a time period between the first start time and the first end time, or a time period when the congestion occurs;
the first start time is one of the following: a time when the congestion reporting condition is met or the congestion occurs, or a time after the congestion reporting condition is met or the congestion occurs; and
the first end time is one of the following: a time when a last uplink data packet carrying congestion information is sent, a time when the congestion reporting condition is no longer met or the congestion ends, a time when the congestion reporting condition is not met or there is no congestion, the time when the terminal leaves the first communication device, the time when the first object is released, the time when the first timer stops, the time when the second timer stops, a time after the last uplink data packet carrying the congestion information is sent, a time after the congestion reporting condition is no longer met or the congestion ends, a time after the congestion reporting condition is not met or there is no congestion, the time after the terminal leaves the first communication device, the time after the first object is released, the time after the first timer stops, or the time after the second timer stops;
wherein
the second time period is one of the following: a time period between the second start time and the second end time, or a time period when the congestion ends or there is no congestion;
the second start time is one of the following: the time when the last uplink data packet carrying the congestion information is sent, the time when the congestion reporting condition is no longer met or the congestion ends, the time when the congestion reporting condition is not met or there is no congestion, the time after the last uplink data packet carrying the congestion information is sent, the time after the congestion reporting condition is no longer met or the congestion ends, or the time after the congestion reporting condition is not met or there is no congestion; and
the second end time is one of the following: the time when the congestion reporting condition is met or the congestion occurs, the time after the congestion reporting condition is met or the congestion occurs, the time when the terminal leaves the first communication device, the time when the first object is released, the time when the second timer stops, the time after the terminal leaves the first communication device, the time after the first object is released, or the time after the second timer stops;
wherein
the first time interval is a time interval based on the first start time; and
the second time interval is a time interval based on the first end time.

33. An information processing apparatus, applied to a second communication device and comprising:
a second execution module, configured to perform a second operation, wherein the second operation comprises at least one of the following:
modifying a congestion marking in an uplink data packet to a value used to indicate occurrence of congestion;
stopping modifying a congestion marking in an uplink data packet to a value used to indicate occurrence of congestion;
modifying a congestion marking in a downlink data packet to a value used to indicate occurrence of congestion;
stopping modifying a congestion marking in a downlink data packet to a value used to indicate occurrence of congestion;
performing a fifth action, wherein the fifth action comprises at least one of the following:
sending second information;
saving or updating congestion information;
modifying a status of a first object to a congested state;
modifying a congestion marking in a data packet to a value used to indicate occurrence of congestion; or
discarding an uplink dummy data packet, wherein the uplink dummy data packet comprises a first dummy data packet and/or a second dummy data packet; or
performing a sixth action, wherein the sixth action comprises at least one of the following:
sending third information;
deleting congestion information;
modifying a status of a first object to an uncongested state;
stopping modifying a congestion marking in a data packet to a value used to indicate occurrence of congestion; or
discarding an uplink dummy data packet, wherein the uplink dummy data packet comprises a first dummy data packet and/or a second dummy data packet;
wherein the second information comprises at least one of the following:
information used to indicate start of the congestion or occurrence of the congestion;
information used to indicate a congestion level;
information used to indicate a congestion direction;
information used to indicate start of uplink congestion or occurrence of uplink congestion; or
information used to indicate start of downlink congestion or occurrence of downlink congestion; and
the third information comprises at least one of the following:
information used to indicate end of the congestion or no congestion;
information used to indicate the congestion direction;
information used to indicate end of the uplink congestion or no uplink congestion; or
information used to indicate end of the downlink congestion or no downlink congestion.

34. A communication device, comprising a processor, a memory, and a computer program stored in the memory and capable of running on the processor, wherein when the computer program is executed by the processor, the steps of the information processing method according to any one of claims 1 to 31 are implemented.

35. A computer-readable storage medium, wherein the computer-readable storage medium stores a computer program, and when the computer program is executed by a processor, the steps of the information processing method according to any one of claims 1 to 31 are implemented.
